(19)

Europäisches Patentamt
European Patent Office
Office européen des brevets

(11)  EP 3 671 647 B1

(12)  EUROPEAN PATENT SPECIFICATION

(45) Date of publication and mention
of the grant of the patent:
**17.01.2024  Bulletin 2024/03**

(21) Application number: **19216172.7**

(22) Date of filing: **13.12.2019**

(51) International Patent Classification (IPC):
*G06T 11/00* (2006.01)     *G06T 5/00* (2006.01)
*G06T 5/50* (2006.01)

(52) Cooperative Patent Classification (CPC):
**G06T 5/002; G06T 5/50; G06T 11/005;**
G06T 2207/10081; G06T 2207/20081;
G06T 2207/20084; G06T 2211/408; G06T 2211/441

(54)  **X-RAY COMPUTED TOMOGRAPHY (CT) SYSTEM AND METHOD**

RÖNTGENCOMPUTERTOMOGRAPHIESYSTEM UND -VERFAHREN

SYSTÈME ET PROCÉDÉ DE TOMODENSITOMÉTRIE À RAYONS X (CT)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2018  US 201816231189
17.07.2019  JP 2019132018**

(43) Date of publication of application:
**24.06.2020  Bulletin 2020/26**

(73) Proprietor: **Canon Medical Systems Corporation
Otawara-shi, Tochigi 324-0036 (JP)**

(72) Inventors:
• **ZHOU, Jian
Illinois, 60061 (US)**
• **LIU, Yan
Illinois, 60061 (US)**
• **YU, Zhou
Illinois, 60061 (US)**

(74) Representative: **Marks & Clerk LLP
15 Fetter Lane
London EC4A 1BW (GB)**

(56) References cited:
**WO-A1-2017/223560      WO-A1-2018/126396
US-A1- 2018 018 757**

• **EUNHEE KANG ET AL: "A deep convolutional neural network using directional wavelets for low-dose X-ray CT reconstruction", ARXIV.ORG, CORNELL UNIVERSITY LIBRARY, 201 OLIN LIBRARY CORNELL UNIVERSITY ITHACA, NY 14853, 31 October 2016 (2016-10-31), XP081364425, DOI: 10.1002/MP.12344**
• **Hanming Zhang ET AL: "Image Prediction for Limited-angle Tomography via Deep Learning with Convolutional Neural Network", , 29 July 2016 (2016-07-29), XP055451427, Retrieved from the Internet: URL:https://arxiv.org/ftp/arxiv/papers/160 7/1607.08707.pdf [retrieved on 2019-04-17]**

**Description**

FIELD

Embodiments described herein relate generally to an X-ray computed tomography (CT) system and method.

BACKGROUND

Computed tomography (CT) systems and methods are widely used, particularly for medical imaging and diagnosis. CT systems generally create images of one or more sectional slices through a subject's body. A radiation source, such as an X-ray tube, irradiates the body from one side. The attenuation of the radiation that has passed through the body is measured by processing electrical signals received from the detector, which are then used to reconstruct an image of the body by performing an inverse Radon transformation (or an equivalent thereof).

Originally, energy-integrating detectors were used to measure CT projection data, but more recently, photon-counting detectors have become a feasible alternative to conventional energy-integrating detectors. Photon-counting detectors (PCDs) have many advantages including being able to perform spectral CT. To obtain the spectral nature of the transmitted X-ray data, the photon-counting detectors split the X-ray beam into its component energies or spectrum bins and count a number of photons in each of the bins. Since spectral CT involves the detection of transmitted X-rays at two or more energy levels, spectral CT generally includes dual-energy CT by definition.

Spectral and dual-energy CT are advantageous because they can be used to perform material decompositions, whereby bone can be distinguished from soft tissues in the body, providing more clinical information for doctors and medical clinicians. Various configurations can be used for spectral imaging in CT. In general, the spectral CT configurations breakdown into two types, (i) generating different energy spectra at X-ray source in combination with energy integrating detector (e.g., fast kilo-voltage peak (kVp)-switching, and dual source configurations), and (ii) a broad-energy-spectrum X-ray source together with an energy discriminating/resolving detector.

More particularly, there are four spectral CT configurations of practical significance: PCD spectrally resolving detectors, dual-layer detectors, dual source and detector systems, and fast kVp-switching. For example, the PCDs discussed above can be used as energy resolving detectors with a broad-spectrum X-ray source. Another type of energy resolving detector uses various X-ray energy filters arranged in front of respective energy integrating detectors, such that the filters perform the function of separating the detected X-rays into different energy bands (e.g., a dual-layer detector that can separate photons by energy). In a third spectral CT configuration, dual X-ray sources are arranged opposite respective detectors, each source-detector pairing forming its own CT scanner system without overlapping with or interfering with the other (e.g., being arranged at right angles) and each source-detector pairing operating at a different X-ray spectrum than the other. With this arrangement, two CT scans with two different X-ray spectra can be simultaneously performed. In a forth configuration, a single integrating source can be used with an X-ray that uses fast kVp-switching to rapidly alternate between a high-energy X-ray spectrum and low-energy X-ray spectrum as the view angle of the CT scanner rotates around the patient. However, each of these four alternatives for spectral/dual-energy CT has its own unique pitfalls and shortcomings.

For example, photon-counting detectors (PCDs) are susceptible to pulse pileup (i.e., multiple X-ray detection events occurring at a single detector can within the detector's time response). Further, efforts to curb pileup by making the PCDs smaller in cross-sectional area are limited by tradeoffs due to increased susceptibility to charge migration/sharing and k-escape.

In the dual-layer detector approach, the combination of scintillators and photo-multiplier tubes suffer from low-energy noise and from being poorly optimized to achieve out-of-band energy suppression. Further, energy separation is degraded by the significant overlap between the two readout spectra.

The dual-source and dual-detector configuration suffers from being expensive and from cross-scatter effects.

The fast kVp-switching configuration is also expensive due to the additional costs associated with an ultra-high frequency generator and parallel data acquisition systems (DASs) used to acquire in parallel the high-energy and low-energy projection data.

Accordingly, a better spectral CT approach is desired that overcomes the above-identified deficiencies in the related approaches.

WO 2017/223560 relates to tomographic/tomosynthetic image reconstruction systems and methods in the framework of machine learning, such as deep learning. A machine learning algorithm is used to obtain an improved tomographic image from raw data, processed data, or a preliminarily reconstructed intermediate image for biomedical imaging or any other imaging purpose.

WO 2018/126396 relates to the use of deep learning techniques, which may be implemented using trained neural networks, to estimate various types of missing projection or other unreconstructed data. Similarly, the method may also be employed to replace or correct corrupted or erroneous projection data as opposed to estimating missing projection data.

US 2018/018757 relates to a method and system for transforming low-quality projection data into higher quality projection data, using of a machine learning model. Regions are extracted from an input projection image acquired, for example, at a reduced x-ray radiation dose (lower-dose), and pixel values in the region are entered into the machine learning model as input. The output of the machine learning model is a region that corresponds to the input region.

SUMMARY

TECHNICAL PROBLEM

The objects intended by the embodiments include realizing spectral CT that overcomes deficiencies identified for spectral CT configurations.

SOLUTION TO PROBLEM

According to one embodiment, an X-ray computed tomography (CT) system is provided as recited in claim 1. In a further embodiment, a method is provided as recited in claim 15.

BRIEF DESCRIPTION OF THE DRAWINGS

Figure 1 shows a schematic diagram of an arrangement of an X-ray source and detector in a computed tomography (CT) scanner, according to one embodiment.
Figure 2A shows an example of view angles/positions of an X-ray source for fast kVp-switching, according to one embodiment.
Figure 2B shows an example of kilo-voltage peak values as a function of time for fast kVp-switching, according to one embodiment.
Figure 3A shows an example of view angles/positions of an X-ray source for sparse kVp-switching, according to one embodiment.
Figure 3B shows an example of kVp values as a function of time for sparse kVp-switching, according to one embodiment.
Figure 4 shows a plot of a probability density function for an energy spectra of X-rays emitted at low- and high-kVp switching, according to one embodiment.
Figure 5A shows an image reconstructed using an adaptive iterative dose reduction (AIDR) three-dimensional (3D) reconstruction method, the image being reconstructed from sparse kVp-switching projection data for a low-kVp value of 80 kVp, according to one embodiment.
Figure 5B shows an image reconstructed using an AIDR-3D method, the image being reconstructed from sparse kVp-switching projection data for a high-kVp value of 135 kVp, according to one embodiment.
Figure 5C shows a sum of the images in Figures 5A and 5B, according to one embodiment.
Figure 6 shows an example of a flow diagram for training and using a deep learning (DL) artificial neural network (ANN) to correct artifacts in sparse kVp-switching projection data, according to one embodiment.
Figure 7A shows an example of a high-quality image for full-view projection data acquired at 80 kVp to be paired with the image in Figure 5A in a training data set, according to one embodiment.
Figure 7B shows an example of a high-quality image for full-view projection data acquired at 135 kVp to be paired with the image in Figure 5B in a training data set, according to one embodiment.
Figure 8 shows an example of a two-channel DL-ANN network being trained with low- and high-quality image data to correct sparse-view artifacts arising from sparse kVp-switching, according to one embodiment.
Figure 9 shows an example of a partial flow diagram for training and using the DL-ANN to correct artifacts arising in images reconstructed from sparse kVp-switching projection data, according to one embodiment.
Figure 10 shows an example of a flow diagram for training and using a DL-ANN to perform image-domain material decomposition, according to one embodiment.
Figure 11 shows an example of a two-channel DL-ANN network being trained to perform the image-domain material decomposition, according to one embodiment.
Figure 12 shows a flow diagram in which two separate DL-ANN networks are respectively trained and used to correct artifacts and perform image-domain material decomposition, according to one embodiment.
Figure 13 shows a flow diagram in which a single two-channel DL-ANN network is trained and used to correct artifacts and perform image-domain material decomposition as an integrated process, according to one embodiment.

Figure 14 shows another flow diagram in which the single two-channel DL-ANN network is trained and used to correct artifacts and perform image-domain material decomposition as an integrated process, according to one embodiment.

Figure 15 shows the single two-channel DL-ANN network being trained to both correct artifacts and perform image-domain material decomposition as an integrated process, according to one embodiment.

Figure 16 shows the single two-channel DL-ANN network being trained in the whitening transform domain to both correct artifacts and perform image-domain material decomposition as an integrated process, according to one embodiment.

Figure 17 shows a flow diagram for iteratively adjusting coefficients of a DL-ANN network to optimize a loss-error function, and thereby training the DL-ANN, according to one embodiment.

Figure 18A shows an example of a feedforward ANN, according to one embodiment.

Figure 18B shows an example of a type of ANN referred to as a convolutional neural network (CNN), according to one embodiment.

Figure 19A shows an example of the 80 kVp image in Figure 5A after it has been applied to the artifact-reducing DL-ANN at step 230 of method 202, according to one embodiment.

Figure 19B shows an example of the 135 kVp image in Figure 5B after it has been applied to the artifact-reducing DL-ANN at step 230 of method 202), according to one embodiment.

Figure 20A shows an example of an image for an iodine material component generated without using artifact reducing and material decomposition DL-ANN networks, according to one embodiment.

Figure 20B shows an example of an image for the iodine material component generated using the artifact reducing and material decomposition DL-ANN networks, according to one embodiment.

Figure 20C shows an example of an image for a water material component generated without using the artifact reducing and material decomposition DL-ANN networks, according to one embodiment.

Figure 20D shows an example of an image for the water material component generated using the artifact reducing and material decomposition DL-ANN networks, according to one embodiment.

Figure 21 shows a first example of computed tomography (CT) scanner for sparse kv-switching, according to one embodiment.

Figure 22 shows a second example of CT scanner for sparse kv-switching, according to one embodiment.

Figure 23 shows an example of a configuration of reconstruction circuitry according to one embodiment.

## DETAILED DESCRIPTION

Now, the embodiments will be described with reference to the drawings. The description of the embodiments will use the same names, or similar names with consistent reference symbols, for substantially the same components or elements. The embodiments relate to the use of, for example, deep learning (DL) networks for reconstructing a computed tomography (CT) image from dual-energy (DE) sparse kVp-switching projection data. More specifically, an X-ray computed tomography (CT) system according to certain embodiments includes an acquirer and a processor.

The acquirer is configured to acquire a first image and a second image. The first image is based on a first projection dataset corresponding to a group of discrete first views and acquired with the emission of X-rays of a first energy. The second image is based on a second projection dataset corresponding to a group of discrete second views different from the first views and acquired with the emission of X-rays of a second energy different from the first energy.

The processor is configured to generate a third image corresponding to the streak artifact-mitigated first image and a fourth image corresponding to the streak artifact-mitigated second image, by inputting the first image and the second image to a learned model adapted to output the third image and the fourth image based on the first image and the second image.

The acquirer and the processor will be described in more detail later.

Note that the acquirer may be configured to acquire projection data representative of an intensity of X-ray radiation at multiple detector elements and constituting the first projection dataset and the second projection dataset. The first projection dataset may represent first sparse-view data acquired with a first voltage applied to an X-ray source. The second projection dataset may represent second sparse-view data acquired with a second voltage applied to the X-ray source. The second voltage may be greater than the first voltage. The first sparse-view data is acquired at the group of first views different from the group of second views at which the second sparse-view data is acquired.

The acquirer may also be configured to reconstruct, from the first sparse-view data, a first low-energy image as the first image.

Similarly, the acquirer may be configured to reconstruct, from the second sparse-view data, a first high-energy image as the second image.

The processor may be configured to acquire an artifact-mitigating neural network that has two channels, one input channel for a low-energy image and another input channel for a high-energy image. The artifact-mitigating neural network may be the aforementioned learned model, and has been trained using a training dataset. The training dataset includes input images that are respective pairs of sparse-view reconstructed images having complementary streak artifacts, and corresponding target images in which the streak artifacts are mitigated.

The processor may also be configured to apply the first low-energy image and the first high-energy image to the artifact-mitigating neural network to generate the third image and the fourth image as artifact-mitigated images.

The X-ray CT system as above performs methods of mitigating artifacts in computed tomography (CT) images from sparse-view kVp-switching computed tomography (CT) scans.

It is noted that the methods and apparatus described herein overcome the above-identified deficiencies of other spectral and dual-energy (DE) computed tomography (CT) approaches. These deficiencies are overcome by applying reconstructed images from sparse-view projection data, which is generated using sparse kVp-switching, to a deep learning (DL) artificial neural network (ANN) adapted to, for example, remove artifacts from and decompose the spectral reconstructed images into material component images.

As discussed above, related approaches to spectral CT suffer from various deficiencies, including, e.g., higher costs and/or degraded image quality.

For example, higher cost is a deficiency in both fast kVp-switching and dual/ detector -source systems. The methods described herein use kVp-switching but, in contrast to fast kVp-switching systems, the kilo-voltage peak (kVp) applied across the X-ray tube of the source is switched slowly (i.e., the kVp switching is sparse, resulting in sparse view projection data for both low- and high-kVp values). That is, rather than switching between low- and high-kVp values for each change of the projection angle (view), the kVp-switching used herein is sparse, meaning the kVp-switching is performed less frequently, such that a given kVp setting is maintained as the CT scanner rotates through several projection angle before switching to the other kVp setting. Accordingly, after switching to a high kVp setting the X-ray source maintains the high kVp voltage while the scanner rotates through and acquires projection images at many projection angles before switching back to a low kVp setting, which is then maintained through the next several projection angles, and so forth. In this way a single data acquisition system (DAS) can be used, and simpler, less expensive hardware is sufficient to switch the voltage across the X-ray tube given the slower rate of kVp-switching.

The methods described herein avoid the deficiencies of photon counting detectors (PCDs) such as pileup because the methods described herein use energy integrating detectors, rather than PCDs. Further, the methods described herein overcome the deficiencies of dual-layer detectors because the two energy spectra are achieved by modulating/switching the voltage applied across the X-ray source, rather than by filtering the X-ray energies at the X-ray detector.

The methods described herein use sparse-kVp-switching dual-energy CT (DECT) system to generate sparse view projection data for a low- and high-energy X-ray spectra, respectively. Because the kVp-switching is performed less frequently than in fast kVp-switching, the methods described herein can be performed using a high-frequency generator (as opposed to the ultra-high frequency generator used for fast kVp-switching). Further, the sparse kVp-switching can be performed using a single sequential DAS (as opposed to the parallel DASs used for fast kVp-switching).

One of the major challenges for the the sparse kVp-switching approach to DECT and is that the sparse view data presents challenges with respective to the image quality and material decomposition of the reconstructed images. More particularly, for sparse kVp-switching projection data, it has proven difficult to develop an efficient reconstruction algorithm that is not susceptible to streak artifacts, beam hardening, and other effects degrading the image quality. On the one hand, analytical reconstruction methods such as filtered back-projection (FBP) can be efficient, but, when they are applied to sparse projection data, they generate reconstructed images that suffer from streak artifacts. On the other hand, iterative reconstruction methods, when applied to sparse projection data, can result in degraded spatial resolution and degraded noise texture due to the lower dose of X-rays at each kVp setting. The" kVp" is the peak kilo-voltage (kV) applied between the anode and cathode of an X-ray tube source. Another challenge with sparse kVp-switching projection data is that the trajectories traced by the X-rays to the detector pixels are different between the two kVp setting, rendering sinogram-domain material decomposition infeasible. However, image-domain material decomposition has its own set of difficulties, including, e.g., beam hardening corrections and spatial variations in the energy spectrum of the X-ray beam (e.g., due to different paths through a bow tie filter).

To address the above challenges, the methods described herein use, for example, a deep learning (DL) approach to mitigate artifacts in images reconstructed from sparse-view projection data acquired using sparse kVp-switching DECT system. Further, for example, the methods described herein use the deep learning (DL) approach also for image-domain material decomposition.

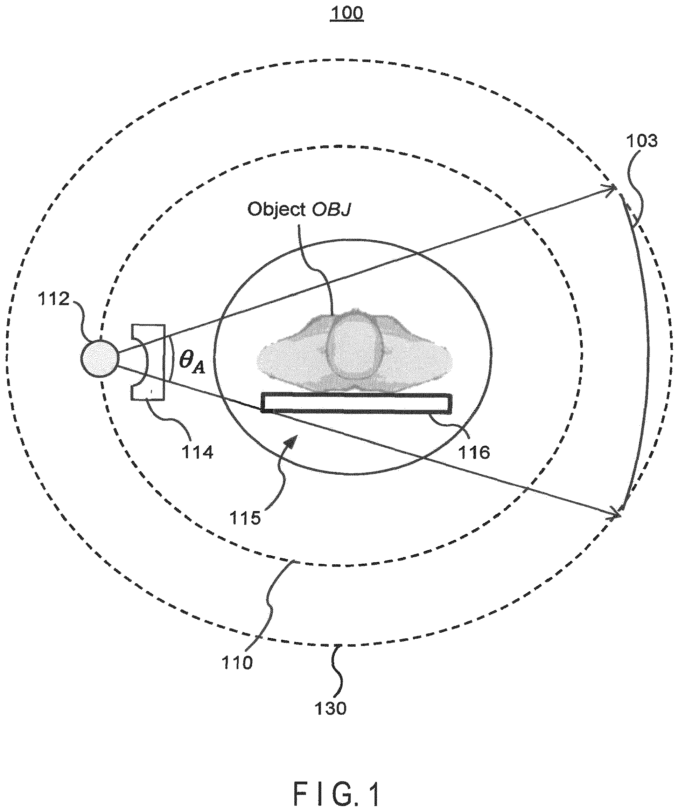

Referring now to the drawings, wherein like reference numerals designate identical or corresponding parts throughout the several views, Figure 1 shows a configuration of an X-ray source and detector in computed tomography (CT) scanner having energy-integrating detectors arranged in a third-generation geometry. Illustrated in Figure 1 is a non-limiting example of relative positions among an imaged object *OBJ* resting on a table 116, an X-ray source 112, a collimator/filter 114, and a pixelated X-ray detector 103, which includes an array of individual detector elements (i.e., pixels). The X-ray source 112 is configured to radiate X-rays having an energy spectrum that depends on the voltage applied. The energy-integrating X-ray detector 103 includes multiple detector elements configured to output projection data. A controller (not illustrated) is configured to change, back-and-forth between a high kV and a low kV, the voltage applied to the X-ray source at increments of two or more projection views of a series of projection views.

In one embodiment, the X-ray source 112, the collimator/filter 114 are fixedly connected to an annular rotational frame 110 that is rotatably connected to a gantry. For example, the annular rotational frame 110 can be an annular ring configured to rotate within a gantry while the object OBJ remains fixed in space on the table 116, or, alternatively, in a helical scan the table can be translated along the bore of the gantry while the X-ray source 112 and the X-ray detector 103 are rotated around the bore of the gantry. The gantry of the CT scanner also includes an open aperture 115 within the bore, which can be centered at the iso-center of the annular rotational frame 110. The open aperture 115 enables the object *OBJ* to be placed in a projection plane of the X-rays from the X-ray source. In certain embodiments, the X-ray detector 103 is fixedly connected to another rotational component 130 that is rotatably connected to the gantry. In a rotate/rotate configuration, the annular rotational frame 110 and the rotational component 130 can rotate in unison, maintaining the X-ray detector 103 diametrical opposed to the X-ray source 112 to obtain projection data of the object *OBJ* at a progression of projection angles (i.e., views). Sinograms are created by arranging the projection data with projection angles arranged along one axis and the spatial dimensions of the projection data arranged along the other axes. The projection data (sinograms) can be used to reconstruct a cross-sectional image of the object OBJ.

In spectral CT, projection data having multiple energy components is used to represent projective measurements of the object *OBJ.* These projective measurements are made at a series of angles enabling conventional CT image reconstruction methods similar to non-spectral CT. However, unlike non-spectral CT, spectral CT generates additional information (i.e., spectral attenuation information) enabling a decomposition of the projective measurements into material components. Setting aside k-edge methods, the number of materials is usually two, based on the unique spectral signatures of X-ray attenuation due to Compton scattering and photoelectric attenuation, respectively. That is, the spectral differences between the X-ray attenuation for two material components arise from the different ratios of Compton scattering to photoelectric attenuation they exhibit e (e.g., the X-ray attenuation due to a high-Z material like iodine is comprised of a different ratio of Compton scattering to photoelectric attenuation than a low-Z material like water).

Mapping the projection data from the spectral domain to the material domain can be performed either in the sinogram-domain (i.e., before the image reconstruction process) or in the image-domain (i.e., after the image reconstruction process). However, to be performed in the sinogram (projection) domain, the projection data should include identical (or nearly identical) X-ray trajectories for each of the dual-energy components. In fast kVp-switching, this achieved because the CT scanner has rotated very little between adjacent high-kV and low-kV projection views. However, for sparse kVp-switching the difference between X-ray trajectories becomes large between the projection views in the middle of a long sequence of images acquired at the same low- or high-kVp settings on the X-ray tube.

The attenuation of X-rays in biological materials is dominated by two physical processes (*i.e.*, photoelectric absorption and Compton scattering). Thus, the attenuation coefficient as a function of energy can be approximated by the decomposition

$$\mu\left(E, x, y\right) = \mu_{PE}\left(E, x, y\right) + \mu_{C}\left(E, x, y\right),$$

wherein $\mu_{PE}(E, x, y)$ is the photoelectric attenuation and $\mu_C(E, x, y)$ is the Compton attenuation. Alternatively, this attenuation coefficient can be rearranged into a decomposition of a high-Z material (*i.e.*, material 1) and a low-Z material (*i.e.*, material 2) to become

$$\mu\left(E, x, y\right) \approx \mu_1\left(E\right) c_1\left(x, y\right) + \mu_2\left(E\right) c_2\left(x, y\right),$$

wherein $c_1(x, y)$ and $c_2(x, y)$ are, respectively correspond to a first and second material component. Material decomposition is the process of solving from the $c_1(x, y)$ and $c_2(x, y)$ that best approximate with measured/reconstructed attenuation spectra.

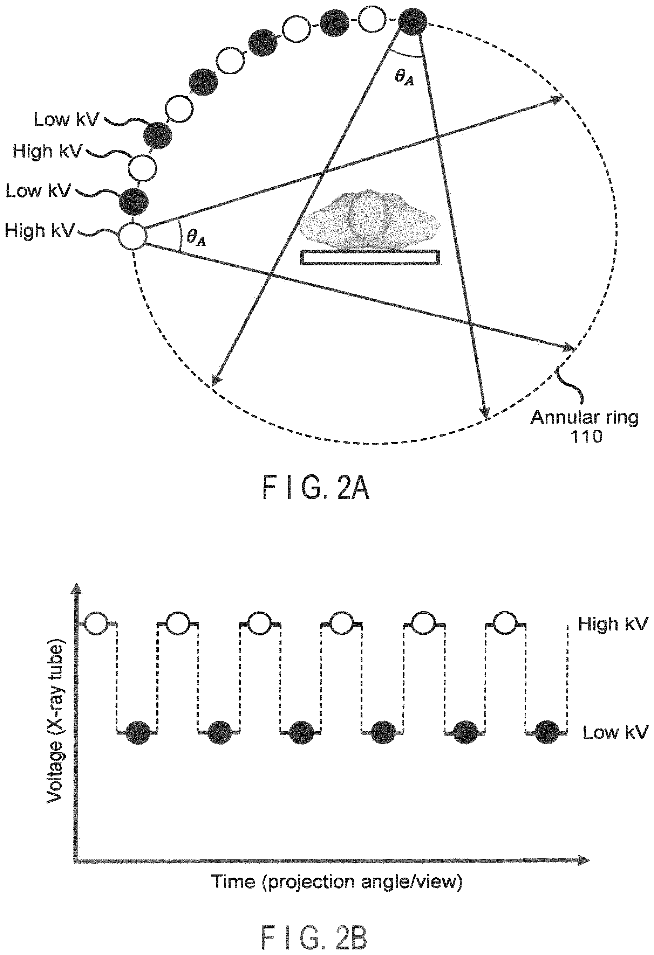

Figures 2A and 2B show diagrams of an embodiment of fast kVp-switching. The kVp setting on the X-ray tube is changed for each projection angle. In Figure 2A, the locations of the X-ray source for acquisitions of a projection image using a high-kVp (low-kVp) setting are indicated by the white (black) circles. In Figure 2B, the voltage applied to the X-ray tube is shown as a function of time, with the time and voltage for projection images acquired at the high-kVp (low-kVp) setting indicated by the white (black) circles.

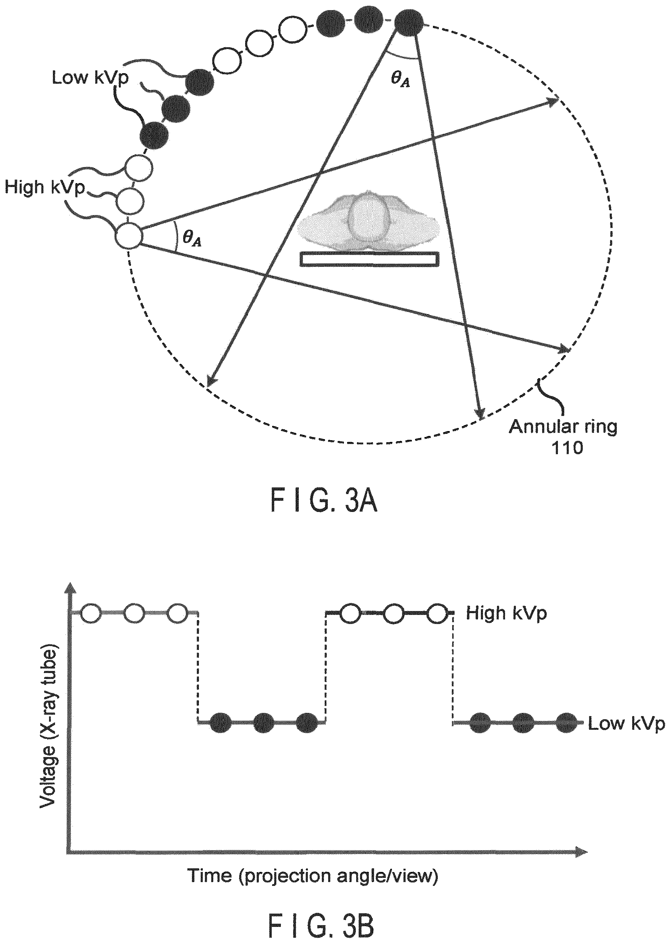

Figures 3A and 3B show diagrams of an embodiment of sparse kVp-switching. The kVp setting on the X-ray tube is changed only after a succession of *N* projection images at different projection angles have been acquired, where *N* is a number greater than one. In Figure 3A, the locations of the X-ray source for acquisitions of a projection image using a high-kVp (low-kVp) setting are indicated by the white (black) circles. In Figure 3B, the voltage applied to the X-

6

ray tube is shown as a function of time, with the time and voltage for projection images acquired at the high-kVp (low-kVp) setting indicated by the white (black) circles.

In the non-limiting example of Figures 3A and 3B, *N* is three, but *N* can be any integer two or greater. Further, the number of successive projection images acquired at a given kVp setting does not need to be constant throughout a CT scan, and different intervals can be applied between different kVp settings (e.g., within a given CT scan, more projection images can be acquired at a high-kVp setting than at a low-kVp setting or vice versa), as would be understood by a person of ordinary skill in the art. In other words, the controller (not illustrated) may be configured to change the voltage applied to the X-ray source 112 such that a number of projection views at the high kVp is different from a number of projection views at the low kVp.

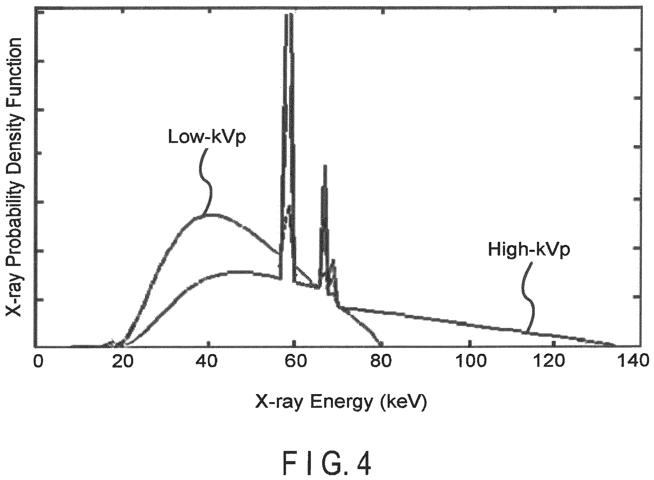

The method of sparse kVp-switching is illustrated herein using the non-limiting example of a low-kVp setting of 80 kVp and a high-kVp setting of 135 kVp. For an X-ray tube, the X-ray spectrum is mainly controlled by the voltage (kVp) applied between the anode and cathode to accelerate the electrons before the electrons are suddenly stopped by colliding with the cathode, converting the kinetic energy of the electron into X-rays via a Bremsstrahlung radiation mechanism. By this process, different X-ray spectra can be produced by changing the voltage applied across of the X-ray tube. Figure 4 shows the probability distribution of the X-ray energy produced with a low-kVp setting of 80 kVp and a high-kVp setting of 135 kVp, respectively.

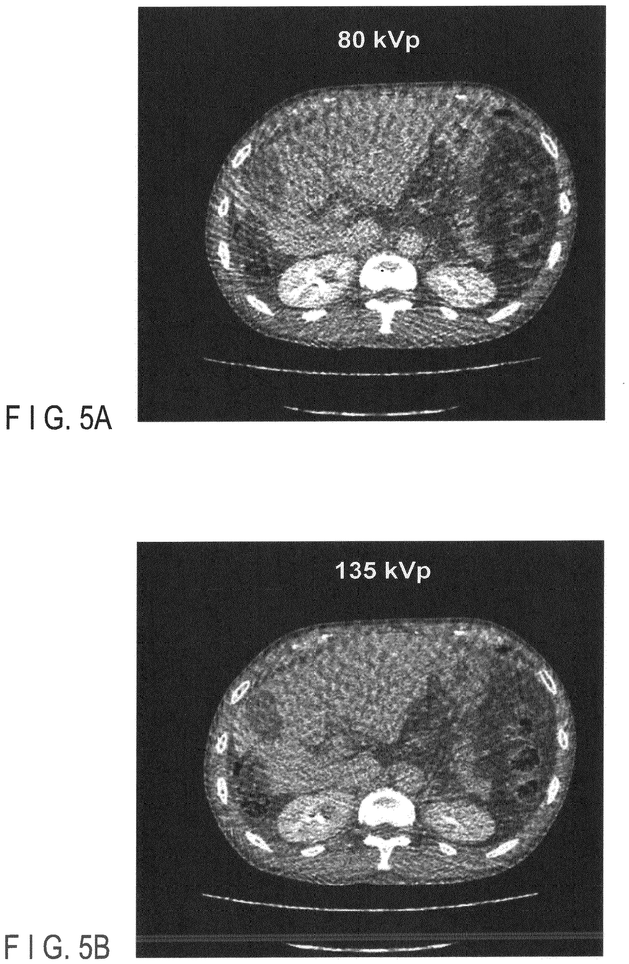

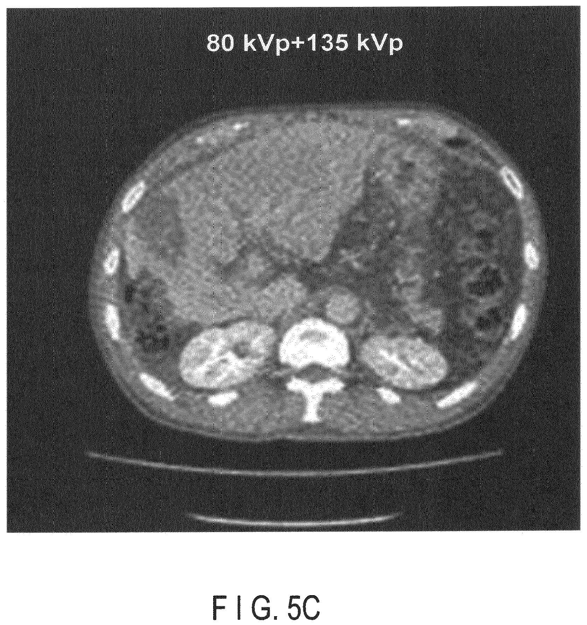

As discussed above, a challenge of image reconstruction using projection data acquired using sparse kVp-switching is that the image quality tends to be degraded due to streak artifacts. For example, Figures 5A and 5B show examples of reconstructed images generated using FBP reconstruction with sparse kVp-switching projection data for 80 kVp and 135 kVp, respectively. The streak artifacts are clearly evident. Further, close inspection reveals that the streak artifacts tend to be complementary. That is, a bright streak in the 80 kVp image corresponds to a dark streak in the 135 kVp image, and vice versa. To illustrate this, Figure 5C shows a sum of the 80 kVp image with the 135 kVp image. To a significant degree the bright streak artifacts in the 80 kVp image counteract the dark streak artifacts in the 135 kVp image. These streak artifacts can be understood as arising from the fact that the projection angles for the 80 kVp and 135 kVp projection data are complementary, as shown in Figure 3A. For example, the sequences/intervals of projection angles for which the CT scanner is set to the High-kVp setting is the complement of and is mutually exclusive with the sequences/intervals of projection angles for which the CT scanner is set to the Low-kVp setting. Thus, the information from the two images can be combined to mitigate the streak artifacts.

The methods described herein use a DL-ANN to learn how to best use the combined information from the respective low- and high-kVp reconstructed images to correct for the streak artifacts to generate high-quality images. Also, a learned DL-ANN is used as a learned model.

Description will be given of such a learned model and processing for training.

A learned model is used by the processor to which a first image and a second image having been acquired by the acquirer are input. The processor generates a third image and a fourth image by inputting the first image and the second image to the learned model. More specifically, the acquirer acquires a first image that is based on a first projection dataset corresponding to a group of discrete first views and acquired with the emission of X-rays of a first energy, and a second image that is based on a second projection dataset corresponding to a group of discrete second views different from the first views and acquired with the emission of X-rays of a second energy different from the first energy.

The processor generates a third image corresponding to the streak artifact-mitigated first image and a fourth image corresponding to the streak artifact-mitigated second image, by inputting the first image and the second image to the learned model which outputs the third image and the fourth image based on the first image and the second image.

Note that a group of third views corresponding to the third image and a group of fourth views corresponding to the fourth image may include the group of first views and the group of second views, respectively.

The group of third views may have a greater number of views than the group of first views, and the group of fourth views may have a greater number of views than the group of second views.

The first projection dataset and the second projection dataset may each be a sinogram.

The third image and the fourth image may each be a CT image corresponding to all the views required for image reconstruction.

The term "discrete" appearing in "a group of discrete first views", "a group of discrete second views different from the first views", etc., may be defined in any way as long as it is related to changes in a tube voltage. For example, the term "discrete" is intended to cover the following instances (a) to (d). Here, a high-kV tube voltage will be referred to as "H", and a low-kV tube voltage will be referred to as "L".

(a) Instances where the tube voltage changes in the order such as: H → L → H → L → H → ... (alternate changes).
(b) Instances where the tube voltage changes in the order such as: H → H → H → L L → L → H → H → H → ... (continuous in part).
(c) Instances where the tube voltage changes in the order such as: H → M → L → M → ... (interposing a middle kV "M" for a view group). An instance where there is a view group for blank inputs may also come under this (c). Note that the middle kV is a voltage value in the course of the switching between the high kV and the low kV, and it is not limited to an intermediate value but may have a predetermined value between the high kV and the low kV. In any case, when there is the middle kV, a DL-ANN having, for example, three channels may be employed.

(d) Instances where the tube voltage changes in the order such as: H → H → L → H → H → ... (different frequencies, i.e., different sizes of view number ranges).

While certain instances (a) to (d) intended to be covered by the term "discrete" have been given, the use of the term "discrete" is not limited to them.

For example, in certain embodiments with the use of the learned model as above, images may be first reconstructed using an FBP reconstruction method and then the DL-ANN network may be applied for artifact and noise correction. This manner can be faster and yield comparable or better image quality than the manner of directly reconstructing a high-quality image using an iterative reconstruction method with an appropriately chosen regularizer (e.g., a total variation minimization (TV) regularization term).

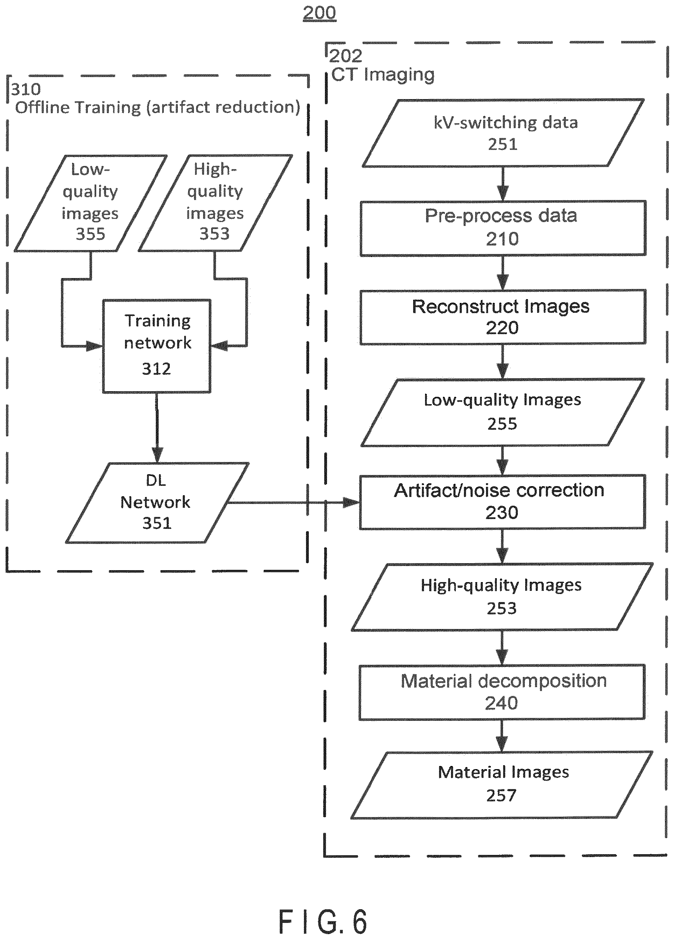

Figure 6 shows a flow diagram of a method 200 for sparse kVp-switching CT image reconstruction that includes a process 310 of training artifact-correction network 351, and includes a process 202 of applying the trained artifact-correction network 351 to correct sparse view reconstructed images 255 to ultimately generate high-quality material-basis images 257.

In process 310, a loss function is used to iteratively adjust parameters (e.g., weights and biases of convolutional and pooling layers) of the DL-ANN network 351 until stopping criteria are satisfied (e.g., convergence of the network coefficients/parameters to a predefined threshold) to generate the trained network 351. The loss function compares high-quality training data 353 (e.g., full-scan images at the respective kVp settings) to a result arising from applying a low-quality training data 355 (e.g., sparse kVp-switching images) to a current version of the DL-ANN network 351. Each pair of high-quality images (e.g., one high-quality image acquired at each of the two kVp settings) is combined with a corresponding pair of low-quality images generated by imaging the same object OBJ or phantom as imaged in the pair of high-quality images. The high-quality images can be referred to as the "target" or "label" and the low-quality images are referred to as the "input." The training data can include a large set of corresponding targets and inputs. The offline training can be performed in advance of a given CT scan (e.g., when a CT scanner is initially installed and calibrated), and the trained DL-ANN network 351 can be stored in memory until a CT scan is acquired and the image reconstruction is performed in step 210.

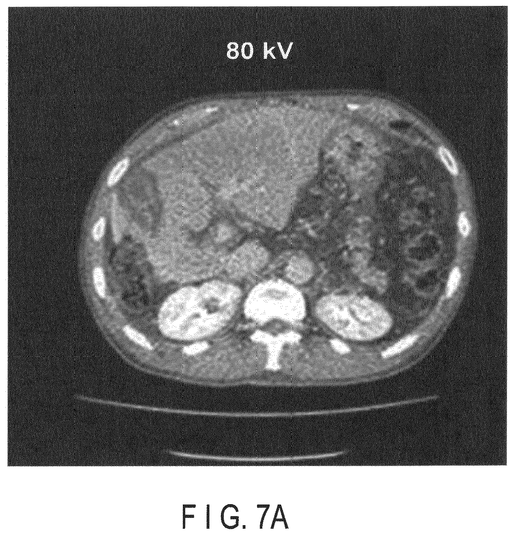

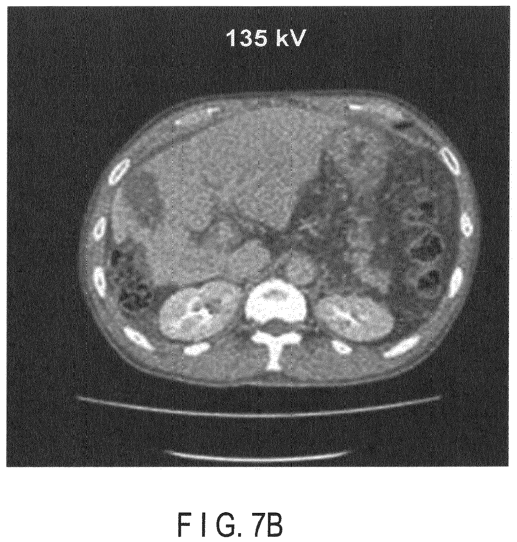

Figures 7A and 7B show examples of high-quality images generated at kVp settings of 80 kV and 135 kV, respectively. The high-quality images can be reconstructed using a full-view scan at each kVp setting, rather than using sparse-view projection data. Further, the high-quality images can be reconstructed using techniques that are known to produce better image quality (e.g., iterative reconstruction with regularization and denoising). The images in Figures 7A and 7B could be used as the target images in combination with the images in Figures 5A and 5B, which would be used as input images, to form part of a training data set that would be used to train a network 351.

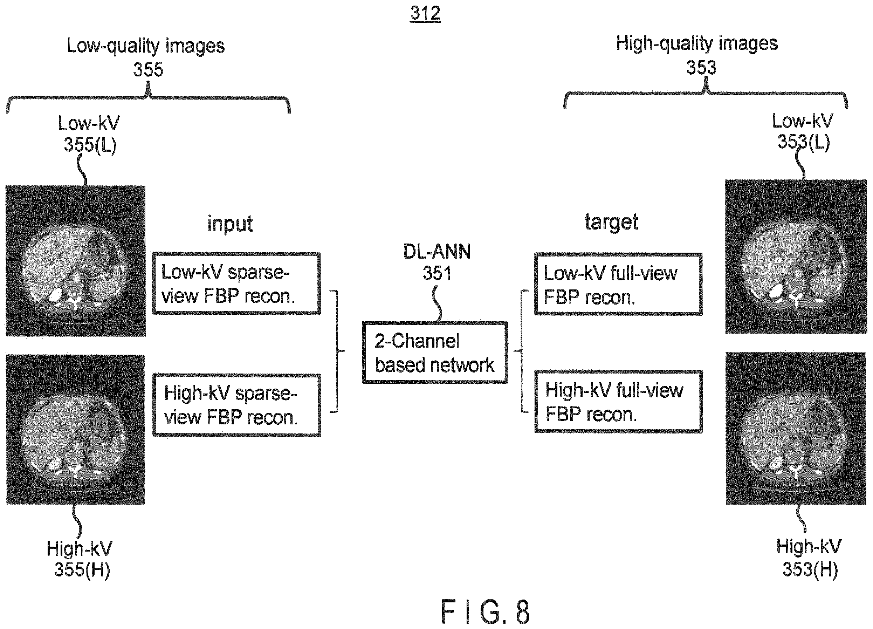

Figure 8 shows an example of this, in which the DL-ANN network 351 is trained using two input images (i.e., a low-kV input image 355(L), which is similar to the image in Figure 5A, and a high-kV input image 355(H), which is similar to the image in Figure 5B) and two target images (i.e., a low-kV target image 353(L), which is similar to the image in Figure 7A, and a high-kV target image 353(H), which is similar to the image in Figure 7B). That is, the DL-ANN network 351 as an artifact-mitigating neural network has been trained using a training dataset in which target images are generated based on first full-view projection data acquired using a low-energy X-ray beam and second full-view projection data acquired using a high-energy X-ray beam. Further, the DL-ANN network 351 is a two-channel based network that takes two input images 355(L) and 355(H) and generates two results that are compared to the two target images 353(L) and 353(H) via the loss function.

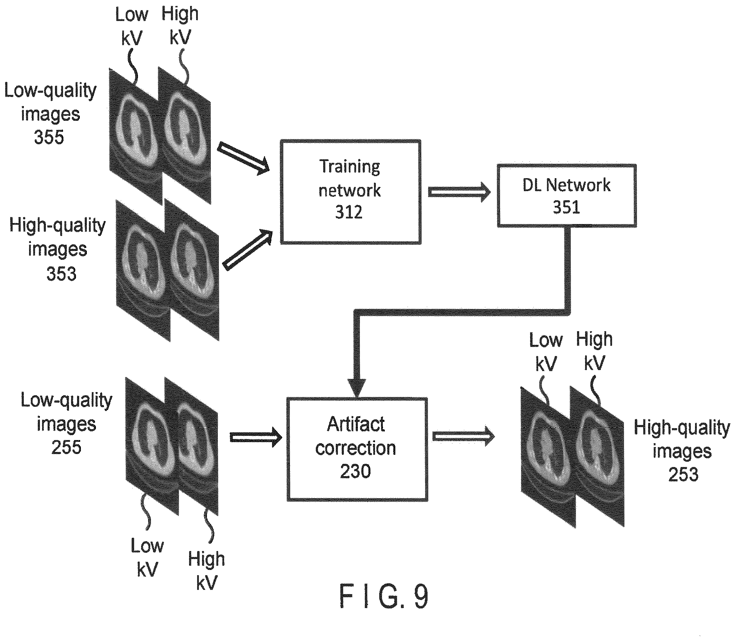

After generating the trained network 351, step 230 of process 202 is used to apply the trained network 351 to generate a high-quality spectral-CT image 253 from the low-quality spectral-CT image 255 arising from step 220 of process 210, as shown in Figure 9. Here, the high-quality spectral-CT images 253 as artifact-mitigated images include a second low-energy image as the third image ("Low kV" in the figure) and a second high-energy image as the fourth image ("High kV" in the figure). The second low-energy image represents the first low-energy image after mitigation of the streak artifacts, and the second high-energy image represents the first high-energy image after mitigation of the streak artifacts.

Returning to Figure 6, in process 202, CT projection data 251 that have been generated using sparse kVp-switching are processed using steps 210, 220, 230 and 240 to generate high-quality material images.

In certain embodiments, the CT projection data 251 can be projection data acquired from a CT scan that are pre-processed at step 210 (e.g., signal preconditioning, calibration corrections, baseline corrections, beam hardening corrections, etc.). The projection data 251 can be a sinogram that is corrected using various calibration and geometric factors. For example, the pre-processing can include corrections for a detector offset and gain, variations in quantum efficiency in the detectors, etc. Further, these corrections can be based on calibration data, empirical derived parameters, and *a priori* known parameters.

In step 220 of process 202, the image reconstruction can be performed using a back-projection method, a filtered back-projection method, a Fourier-transform-based image reconstruction method, an iterative image reconstruction method, a matrix-inversion image reconstruction method, a statistical image reconstruction method, or other reconstruction method as would be understood as a person of ordinary skill in the art. For example, the reconstruction method can use a helical reconstruction technique, a cone-beam reconstruction technique, a Feldkamp algorithm, a FBP reconstruction method, and an adaptive iterative dose reduction (AIDR) three-dimensional (3D) reconstruction method with noise reduction in one or both of the image and sinogram domains. The reconstruction can include denoising, corrections to minimize photon starvation in high attenuation regions, corrections to mitigate quantum noise, edge-preservation/enhancement corrections, and filtering (e.g., linear and non-linear filtering and denoising).

In certain embodiments, reconstruction of sparse-view data at each kV respectively results in artifacts due to the missing samples at some view angles. Since low- and high-energy data are complementary to each other, using a two-channel network that analyses the mutual information provides significant benefit over a one-channel network that considers each energy component (kVp setting) separately.

Accordingly, in step 230 of process 202, the network 351 can be a two-channel network that utilizes the complementary information between the low- and high-energy projection data. In certain embodiments, the training performed in step 312 uses input images that are generated using the same reconstruction method as in step 220. For example, the artifact-mitigating network is trained using a training dataset in which input images are reconstructed by the same reconstruction method as used to reconstruct the first low-energy image and the first high-energy image. Also, for example, step 220 can use a FBP based method such as the AIDR 3D method, and the input images in step 312 can be AIDR 3D reconstruction images acquired using sparse kVp-switching with high- and low-kVp values respectively. Since the acquired projection data at each kVp setting is sparse, the resulting image suffers sparse-sampling artifacts. The target images can be the AIDR 3D reconstruction images acquired using projection data from a full-view rotate-rotate dual-energy scan. Since the sampling is complete at each kV for these target images, the target images are artifacts-free. Further the target images can be reconstructed using any other reconstruction method that generates high-quality images with low noise (e.g., an iterative reconstruction method with an edge-preserving or TV regularizer). Thus, in certain embodiments of step 230, when the low-quality images 255(H) and 255(L) are applied to the two-channel network 351, the generated high-quality images 253(H) and 253(L) can exhibit both reduced artifact and reduced noise.

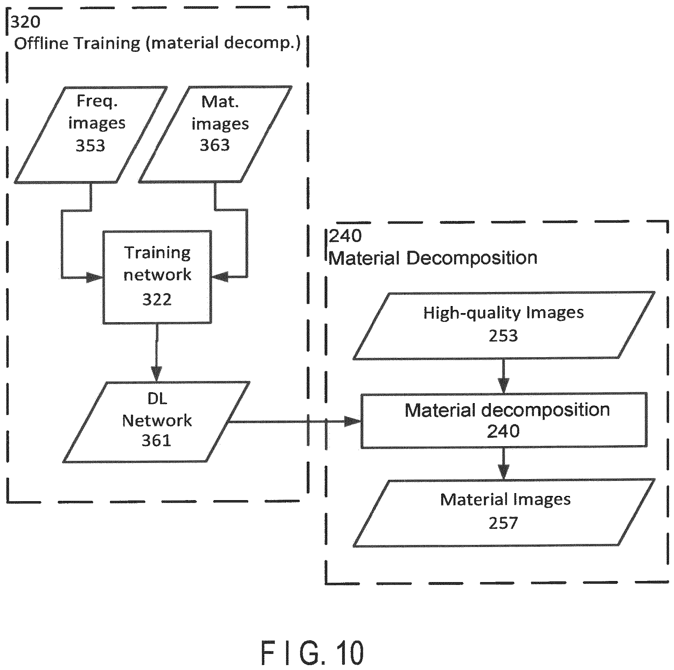

In step 240 of process 202, material decomposition can be performed on the images 253(H) and 253(L) to generate material-component images 257. In general, any material decomposition method can be used to generate material-component images 257. Figures 10-12 show an embodiment of method 200 in which step 240 is performed using a DL-ANN network 361 to perform the material decomposition.

As discussed above, in general, the material decomposition mapping from the spectral domain to the material-component domain can be performed either before or after the image reconstruction process. However, sparse kVp-switching material decomposition is simpler to perform in the image domain than in the projection (sinogram) domain. As discussed above, to perform material decomposition in the projection (sinogram) domain, the projection data should include identical (or nearly identical) X-ray trajectories for each of the measured energy components. In fast kVp-switching, this is achieved because the CT scanner has rotated very little between adjacent high-kV and low-kV. However, for sparse kVp-switching the differences can become large between the projection angles for high- and low-kV and low-kVp settings, making projection-domain material decomposition challenging.

The DL-ANN network 361 can be particular effective at addressing the challenges of image-domain material decomposition in dual-energy CT (DECT). There are two challenges for conventional image-space decomposition. First, the X-ray spectrum of the X-ray beam can be spatially varying due to bowtie filtration. Therefore, the image-space material decomposition matrix is ideally also spatially varying. Second, correcting for beam-hardening artifacts is straightforward and efficient in sinogram-domain material decomposition because the contributions of each material are known along the X-ray trajectories. In contrast, for image-space material decomposition, the beam-hardening correction is more complicated and typically less efficient, requiring time consuming, iterative corrections. Using the DL method described herein, however, image-space material decomposition with beam-hardening corrections can be performed more efficiently than in previous methods. For example, to address the above challenges, deep learning is used with a two-channel network 361 to quickly perform material decomposition while correcting for beam hardening and for spatial variations in the spectrum of the X-ray beam.

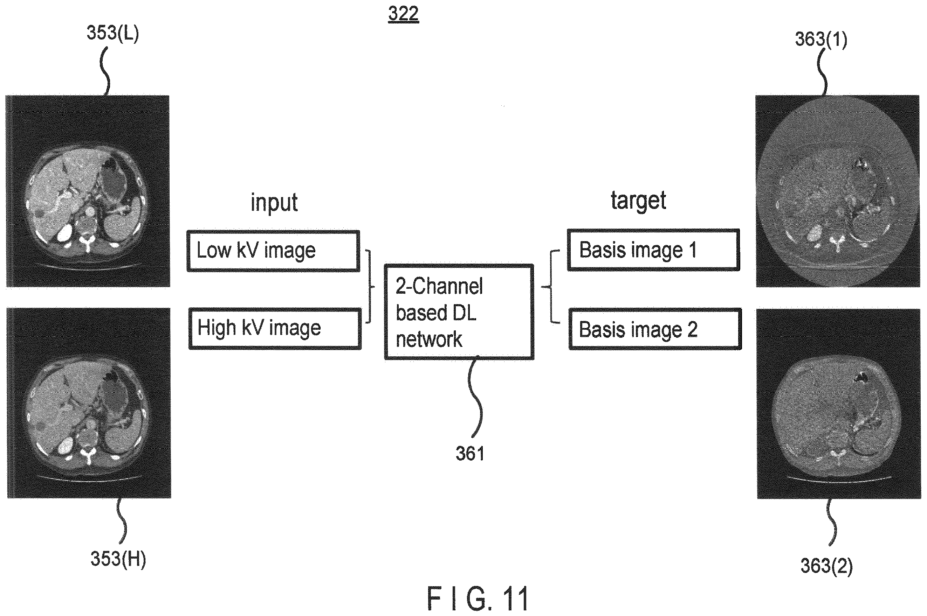

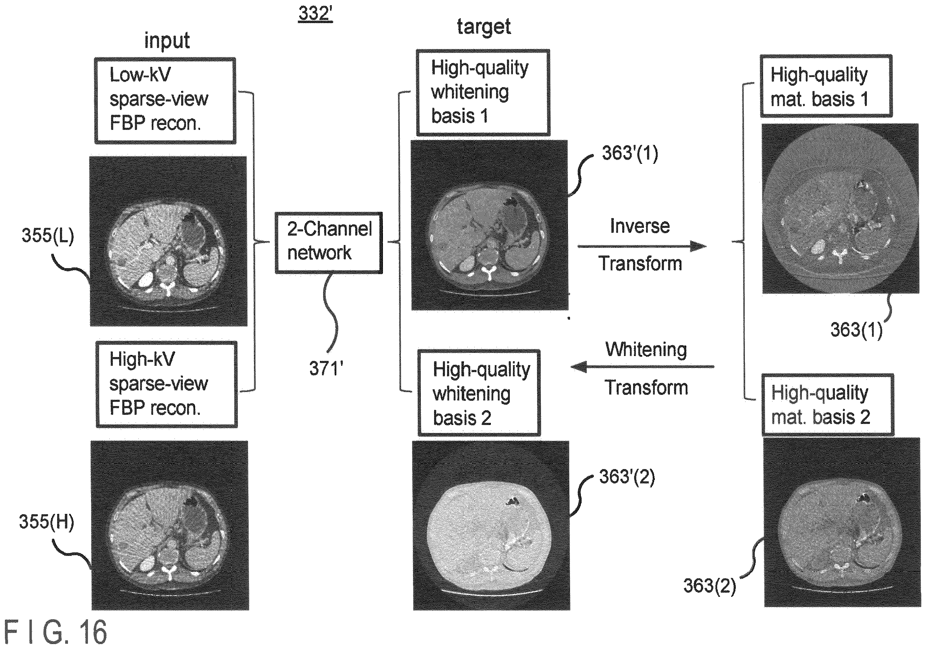

To realize these improvements, Figures 10 and 11 show that the training data includes that the input images are the two high-quality kVp images 353(H) and 353(L), and that the target images are a basis-material image for a first material component 363(1) and a basis-material image for a second material component 363(2). The material-component images 363(1) and 363(2) can be obtained by performing sinogram-domain material decomposition on full-scan projection data and then reconstructing high-quality material images 363(1) and 363(2) from material component projection data (i.e., material decomposition is performed in the sinogram domain prior to reconstruction). That is, these obtained target images include pairs of material-component images 363(1) and 363(2) generated by performing material decomposition in the sinogram domain using projection data of a full-view kVp-switching CT scan to generate material-component projection data, and reconstructing material images from the material-component projection data. The obtained target images may further include pairs of material component images generated by performing a whitening transform on the reconstructed material images as shown in, for example, later discussed Figure 16. Thus, the material-component images 363(1) and 363(2) do not suffer from inaccurate beam-hardening corrections and spatial-spectrum corrections for the X-ray beam because spatial variations in the spectrum and beam hardening corrections can be fully modelled in the sinogram domain. Accordingly, by training on the material-component images 363(1) and 363(2), the DL-ANN network 361 can be trained to more accurately and efficiently perform image-domain material decomposition than is achieved in related image-domain methods. In this relation, the processor may acquire a material-decomposition neural network (e.g., the DL-ANN network 361) that has two channels, one input channel for the low-energy image and another input channel for the high-energy image. The material-decomposition neural network has been trained to generate a first material image (e.g., the high-quality material image 363(1)) and a second material image (e.g., the high-quality material image 363(2)) when a pair of a low-energy image and a high-energy image (e.g., the high-quality kVp images 353(L) and 353(H)), which have streak artifacts mitigated, are applied to the material decomposition neural network. Also, the processor may be further configured to apply the second low-energy image and the second high-energy image to the material-decomposition neural network to generate material-decomposed images. The material-decomposition neural network here may also be a neural network that has been trained using a training dataset in which material-decomposed target images include corrections for beam hardening and account for spatial variations in an X-ray beam used to generate the target images.

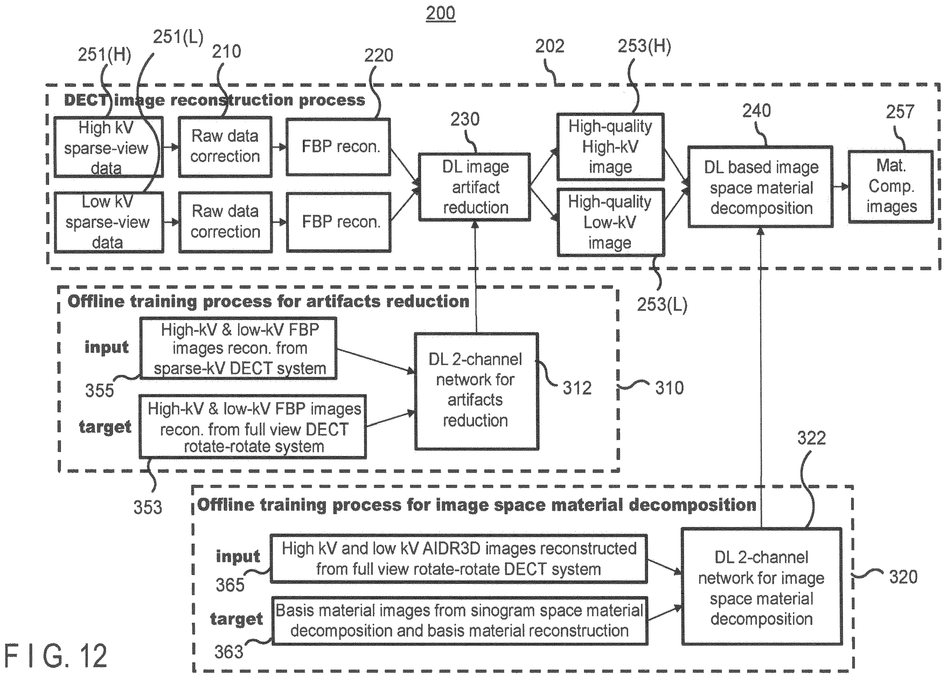

In Figure 12, a flow diagram of method 200 is provided of an embodiment that includes both the artifact reduction DL-ANN network 351 and the image-domain material decomposition DL-ANN network 361.

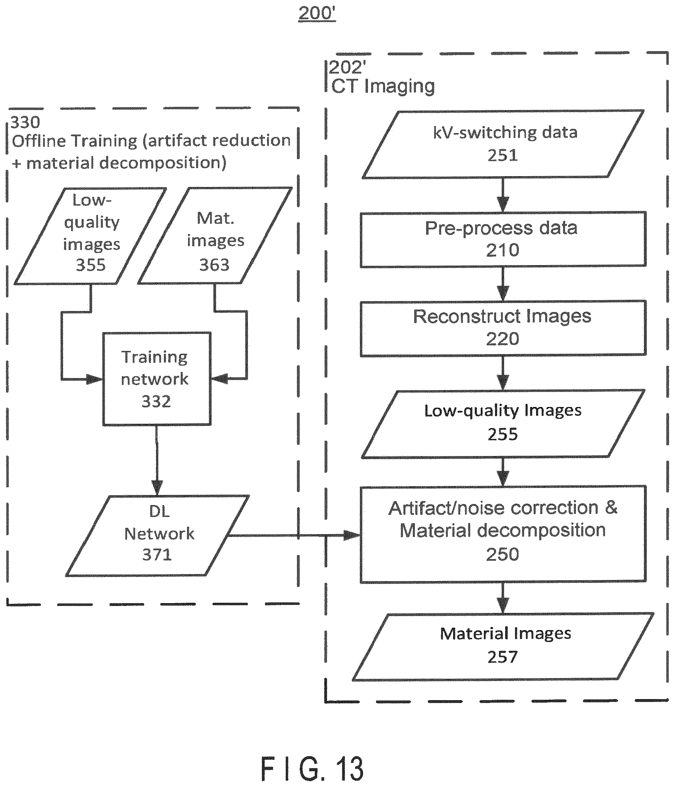

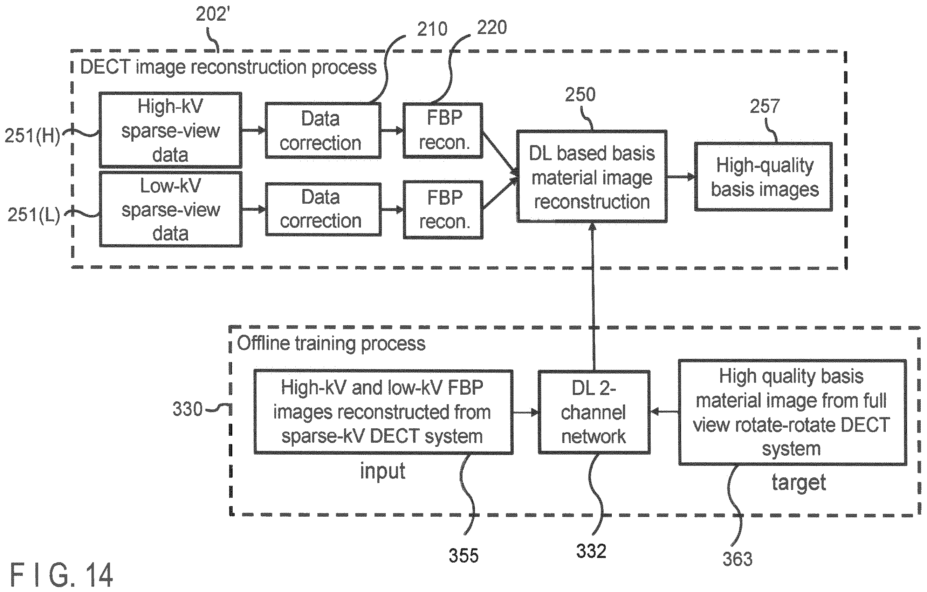

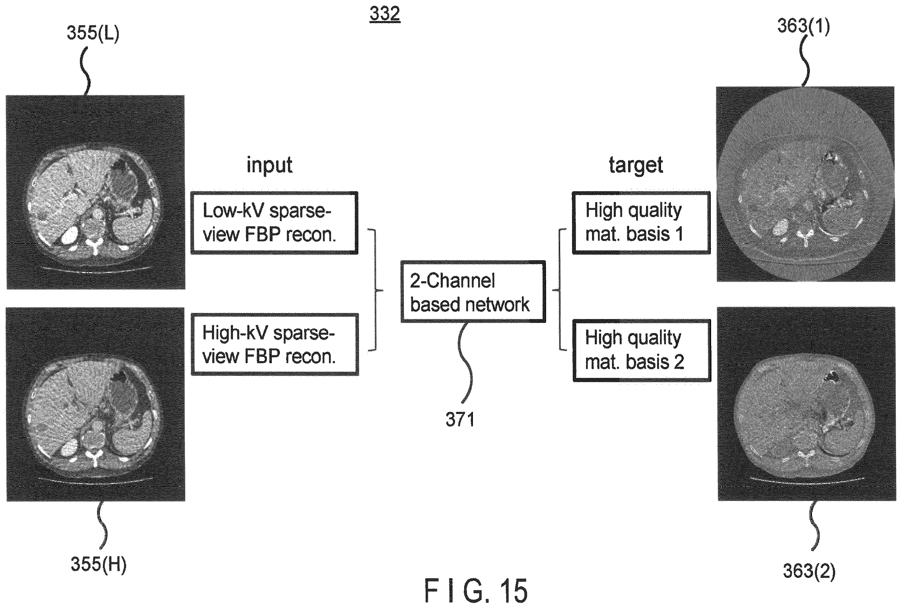

Figures 13 and 14 show flow diagrams of method 200', which is a variation of method 200 in which the artifact reduction and material decomposition of step 230 and 240 have been combined into a single step 250. The DL-ANN network 371 combines both functions of artifact reduction and material decomposition, which are integrated into a single network because, as shown in Figure 15. The DL-ANN network 371 is trained in step 332 using the low-quality images 355(H) and 355(L) as inputs and the high-quality material images 363(1) and 363(2) as targets. It is noted that the artifact-mitigating neural network (e.g., the DL-ANN network 371) is also a material-decomposition neural network that has been trained to both mitigate streak artifacts and decompose spectral images into material components as an integrated process when sparse-view reconstructed images are applied to the artifact-mitigating neural network.

In certain embodiments, in training step 332, the input images to the DL-ANN network 371 are the high- and low-kVp images that have been reconstructed using, e.g, an AIDR 3D or a FBP reconstruction method. Since the images are reconstructed from incomplete sampling data, the input images are subject to sparse-sampling artifacts. The target images of the DL-ANN network 371 are the high-quality basis-material images from a full-view rotate-rotate dual-energy CT scan, as shown in Figure 15. The DL-ANN network 371 can use a two-channel DL-ANN network structure. It is noted that the artifact-mitigating neural network (e.g., the DL-ANN network 371) has been trained using a training dataset in which target images are material images decomposed from spectral images reconstructed from first full-view projection data acquired using a low-energy X-ray beam and from second full-view projection data acquired using a high-energy X-ray beam. The input images are spectral images reconstructed from first sparse-view projection data acquired using the low-energy X-ray beam and from second sparse-view projection data acquired using the high-energy X-ray beam. The first sparse-view projection data is projection view data at projection views that are different angles than projection views of the second sparse-view projection data.

Figure 16 shows a diagram of a step 332', which is a variation of step 332. In step 332', the target images are whitening-transformed images 363'(1) and 363'(2) generated by performing a whitening transform on the high-quality material images 363(1) and 363(2). That is, the material-component images 363(1) and 363(2) are related to the whitening-transformed images 363'(1) and 363'(2) by a whitening transform that de-correlates noise. Thus, when the DL-ANN network 371' is applied to the low-quality images 255 in step 250 of process 202', the result will be whitening-transformed images 257'(1) and 257'(2), and, in step 250, an inverse whitening is performed on the whitening-transformed images 257'(1) and 257'(2) to generate the material-component images 257(1) and 257(2). It is noted that the artifact-mitigating neural network (e.g., the DL-ANN network 371') has been trained using a training dataset in which the target images are material-decomposed images that have been transformed using a whitening transform. The generated material-decomposed images are generated by applying an inverse whitening transform to resultant images output from the material-decomposition neural network.

To optimize the mono-energetic image quality at clinically relevant diagnostic energy range, whitening transform can be applied to the deep learning target image. When the whitening transform matrix is estimated from the 75 keV linear attenuate coefficients, the deep learning tends to optimize the network coefficients to provide high-quality 75 keV mono-energetic image. The basis material decomposition can introduce correlated noise to the basis material image. The whitening transform can de-correlate the noise in two basis material images. Therefore, the trained network can efficiently reduce noise in learning process. In reconstruction process 202, the high-quality material-basis images 257(1) and 257(2) can be obtained by performing an inverse whitening transformation on the output images 257'(1) and 257'(2) from the DL-ANN network 371', when applied in step 250.

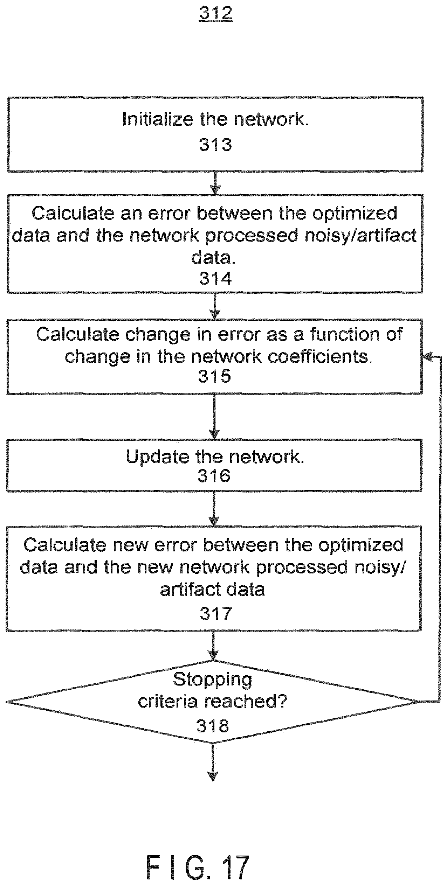

Now a more detailed description of training a DL-ANN network is provided. This description is illustrated using step 312 as an example of training a network, but also applies to the training in performed steps 322, 332, and 332', as would be understood by a person of ordinary skill in the art. Figure 17 shows a flow diagram of one embodiment of the training step 312. In step 312, low-quality (e.g., noisy) images 355 and high-quality (e.g., optimized) images 353 are used as training data to train a DL-ANN network, resulting in the DL-ANN network being output from step 318. In general, the images 355 can be any defect-exhibiting images or input images, for which the "defect" can be any undesirable characteristic that can be affected through image processing (e.g., noise or an artifact). Similarly, images 353 can be referred to as target data, defect-reduced data, defect-minimized data, or optimized data, for which the "defect" is less than in the images 355. The offline DL training step 312 trains the DL-ANN network 351 using a large number of input images 355 that are paired with corresponding target images 353 to train the DL-ANN network 351 to produce images resembling the target images 353 from the input images 355.

In step 312, a set of training data is obtained, and the network 351 is iteratively updated to reduce the error (e.g., the value produced by a loss function). In other words, DL-ANN network infers the mapping implied by the training data, and the cost function produces an error value related to the mismatch between the target images 353 and the result produced by applying a current incarnation of the DL-ANN network 351 to the input images 355. For example, in certain embodiments, the cost function can use the mean-squared error to minimize the average squared error. In the case of a of multilayer perceptrons (MLP) neural network, the backpropagation algorithm can be used for training the network by minimizing the mean-squared-error-based cost function using a (stochastic) gradient descent method.

In step 313 of step 312, an initial guess is generated for the coefficients of the DL-ANN network 351. For example, the initial guess can be based on *a priori* knowledge of the region being imaged or one or more exemplary denoising methods, edge-detection methods, and/or blob detection methods. Additionally, the initial guess can be based on one of a LeCun initialization, an Xavier initialization, and a Kaiming initialization. In these cases, the DL-ANN network 351 (artifact-mitigating neural network) is initialized in step 313.

Steps 314 through 318 provide a non-limiting example of an optimization method for training the DL-ANN network 351. The processor obtains input images 355 including pairs of sparse-view reconstructed images that have complementary streak artifacts. The sparse-view reconstructed images represent reconstructed images from projection data of a sparse-view kVp-switching computed tomography (CT) scan. The processor also obtains target images 353 including pairs of images corresponding to the sparse-view reconstructed images except with the streak artifacts having been mitigated. The obtained target images 353 may include pairs of full-view reconstructed images that represent reconstructed images from projection data of a full-view kVp-switching CT scan.

In step 314, an error is calculated (e.g., using a loss function or a cost function) to represent a measure of the difference (e.g., a distance measure) between the target images 353 (i.e., ground truth) and input images 355 after applying a current version of the network 351. The error can be calculated using any known cost function or distance measure between the image data, including those cost functions described above. Further, in certain embodiments the error/loss function can be calculated using one or more of a hinge loss and a cross-entropy loss.

Additionally, the loss function can be combined with a regularization approach to avoid overfitting the network to the particular instances represented in the training data. Regularization can help to prevent overfitting in machine learning problems. If trained too long, and assuming the model has enough representational power, the network will learn the noise specific to that dataset, which is referred to as overfitting. In case of overfitting, the DL-ANN becomes a poor generalization, and the variance will be large because the noise varies between datasets. The minimum total error occurs when the sum of bias and variance are minimal. Accordingly, it is desirable to reach a local minimum that explains the data in the simplest possible way to maximize the likelihood that the trained network represents a general solution, rather than a solution particular to the noise in the training data. This goal can be achieved, e.g., by early stopping, weight regularization, lasso regularization, ridge regularization, or elastic net regularization.

In certain embodiments, the network 351 is trained using backpropagation. Backpropagation can be used for training neural networks and is used in conjunction with gradient descent optimization methods. During a forward pass, the algorithm computes the network's predictions based on the current parameters Θ. These predictions are then input into the loss function, by which they are compared to the corresponding ground truth labels (i.e., the high-quality image 353). During the backward pass, the model computes the gradient of the loss function with respect to the current parameters, after which the parameters are updated by taking a step of size of a predefined size in the direction of minimized loss (e.g., in accelerated methods, such that the Nesterov momentum method and various adaptive methods, the step size can be selected to more quickly converge to optimize the loss function).

The optimization method by which the backprojection is performed can use one or more of gradient descent, batch gradient descent, stochastic gradient descent, and mini-batch stochastic gradient descent. Additionally, the optimization method can be accelerated using one or more momentum update techniques in the optimization approach that results in faster convergence rates of stochastic gradient descent in deep networks, including, e.g, Nesterov momentum technique or an adaptive method, such as Adagrad sub-gradient method, an Adadelta or RMSProp parameter update variation of the Adagrad method, and an Adam adaptive optimization technique. The optimization method can also apply a second order method by incorporating the Jacobian matrix into the update step.

The forward and backwards passes can be performed incrementally through the respective layers of the network. In the forward pass, the execution starts by feeding the inputs through the first layer, thus creating the output activations for the subsequent layer. This process is repeated until the loss function at the last layer is reached. During the backward pass, the last layer computes the gradients with respect to its own learnable parameters (if any) and also with respect to its own input, which serves as the upstream derivatives for the previous layer. This process is repeated until the input layer is reached.

Returning to the non-limiting example shown in Figure 17, step 315 determines a change in the error as a function of the change in the network can be calculated (e.g., an error gradient), and this change in the error can be used to select a direction and step size for a subsequent change to the weights/coefficients of the DL-ANN network 351. Calculating the gradient of the error in this manner is consistent with certain embodiments of a gradient descent optimization method. In certain other embodiments, this step can be omitted and/or substituted with another step in accordance with another optimization algorithm (e.g., a non-gradient descent optimization algorithm like simulated annealing or a genetic algorithm), as would be understood by one of ordinary skill in the art.

In step 316, a new set of coefficients are determined for the DL-ANN network 351. For example, the weights/coefficients can be updated using the changed calculated in step 315, as in a gradient descent optimization method or an over-relaxation acceleration method. That is, the processor iteratively updates network coefficients to optimize a loss function representing agreement between the target images and output images resulting from the input images applied to the artifact-mitigating neural network.

As discussed above, the processor is configured to train an artifact-mitigating neural network having two channels by initializing the artifact-mitigating neural network, obtaining input images, obtaining target images, and iteratively updating network coefficients.

In step 317, a new error value is calculated using the updated weights/coefficients of the DL-ANN network 351.

In step 318, predefined stopping criteria are used to determine whether the training of the network is complete. For example, the predefined stopping criteria can evaluate whether the new error and/or the total number of iterations performed exceed predefined values. For example, the stopping criteria can be satisfied if either the new error falls below a predefined threshold or if a maximum number of iterations is reached. When the stopping criteria is not satisfied the training process performed in step 312 will continue back to the start of the iterative loop by returning and repeating step 315 using the new weights and coefficients (the iterative loop includes steps 315, 316, 317, and 318). When the stopping criteria are satisfied the training process performed in step 312 is completed.

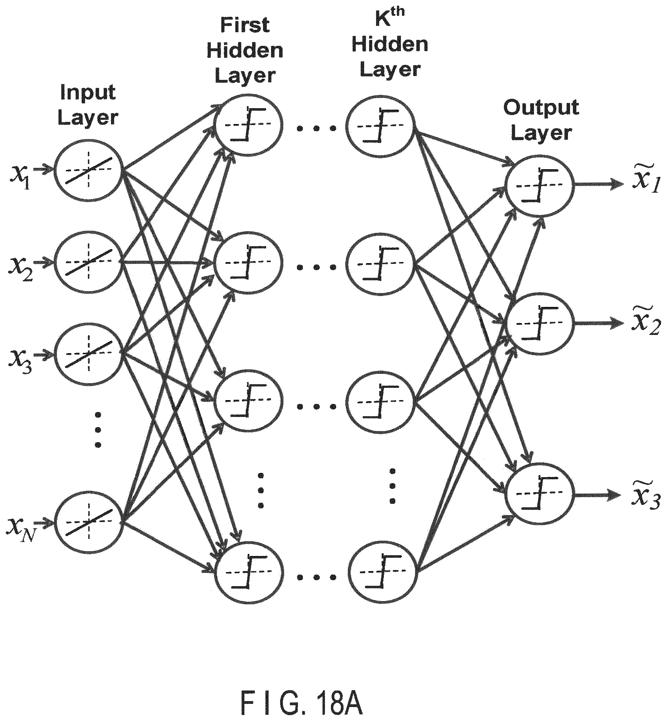

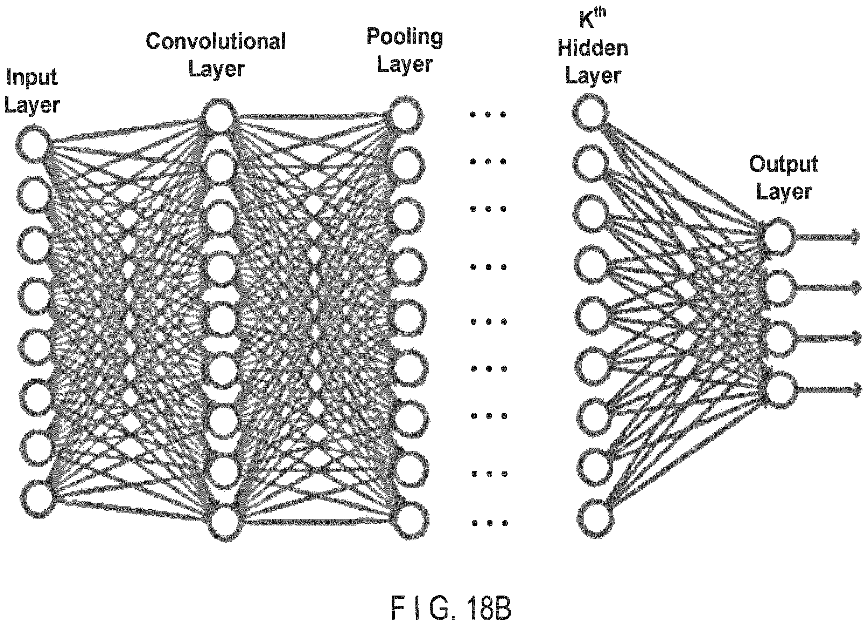

Figures 18A and 18B show various examples of the inter-connections between layers in the DL-ANN network 351. The DL-ANN network 351 can include fully connected, convolutional, and the pooling layer, all of which are explained below. In certain preferred embodiments of the DL-ANN network 351, convolutional layers are placed close to the input layer, whereas fully connected layers, which perform the high-level reasoning, are place further down the architecture towards the loss function. Pooling layers can be inserted after convolutions and proved a reduction lowering the spatial extent of the filters, and thus the amount of learnable parameters. Activation functions are also incorporated into various layers to introduce nonlinearity and enable the network to learn complex predictive relationships. The activation function can be a saturating activation functions (e.g., a sigmoid or hyperbolic tangent activation function) or rectified activation function (e.g., the Rectified Linear Unit (ReLU) applied in the first and second examples discussed above). The layers of the DL-ANN network 351 can also incorporate batch normalization, as also exemplified in the first and second examples discussed above.

Figure 18A shows an example of a general artificial neural network (ANN) having $N$ inputs, K hidden layers, and three outputs. Each layer is made up of nodes (also called neurons), and each node performs a weighted sum of the inputs and compares the result of the weighted sum to a threshold to generate an output. ANNs make up a class of functions for which the members of the class are obtained by varying thresholds, connection weights, or specifics of the architecture such as the number of nodes and/or their connectivity. The nodes in an ANN can be referred to as neurons (or as neuronal nodes), and the neurons can have inter-connections between the different layers of the ANN system. The simplest ANN has three layers, and is called an autoencoder. The DL-ANN network 351 can have more than three layers of neurons, and has as many outputs neurons $\tilde{X}_N$ as input neurons, wherein $N$ is the number of pixels in the reconstructed image. The synapses (i.e., the connections between neurons) store values called "weights" (also interchangeably referred to as "coefficients" or "weighting coefficients") that manipulate the data in the calculations. The outputs of the ANN depend on three types of parameters: (i) the interconnection pattern between the different layers of neurons, (ii) the learning process for updating the weights of the interconnections, and (iii) the activation function that converts a neuron's weighted input to its output activation.

Mathematically, a neuron's network function $m(x)$ is defined as a composition of other functions $n_i(x)$, which can further be defined as a composition of other functions. This can be conveniently represented as a network structure, with arrows depicting the dependencies between variables, as shown in Figure 18. For example, the ANN can use a nonlinear weighted sum, wherein $m(x) = K(\sum_i w_i n_i(x))$, where $K$ (commonly referred to as the activation function) is some predefined function, such as the hyperbolic tangent.

In Figure 18A (and similarly in Figure 18B), the neurons (i.e., nodes) are depicted by circles around a threshold function. For the non-limiting example shown in Figure 18A, the inputs are depicted as circles around a linear function, and the arrows indicate directed connections between neurons. In certain embodiments, the DL-ANN network 351 is a feedforward network.

Figure 18B shows a non-limiting example in which the DL-ANN network 351 is a convolutional neural network (CNN). CNNs are type of ANN that has beneficial properties for image processing, and, therefore, have specially relevancy for the applications of image denoising. CNNs use feed-forward ANNs in which the connectivity pattern between neurons can represent convolutions in image processing. For example, CNNs can be used for image-processing optimization by using multiple layers of small neuron collections which process portions of the input image, called receptive fields. The outputs of these collections can then tiled so that they overlap, to obtain a better representation of the original image. This processing pattern can be repeated over multiple layers having alternating convolution and pooling layers.

Following after a convolutional layer, a CNN can include local and/or global pooling layers, which combine the outputs of neuron clusters in the convolution layers. Additionally, in certain embodiments, the CNN can also include various combinations of convolutional and fully connected layers, with pointwise nonlinearity applied at the end of or after each layer.

CNNs have several advantages for image processing. To reduce the number of free parameters and improve generalization, a convolution operation on small regions of input is introduced. One significant advantage of certain embodiments of CNNs is the use of shared weight in convolutional layers, which means that the same filter (weights bank) is used as the coefficients for each pixel in the layer; this both reduces memory footprint and improves performance. Compared to other image-processing methods, CNNs advantageously use relatively little pre-processing. This means that the network is responsible for learning the filters that in traditional algorithms were hand-engineered. The lack of dependence on prior knowledge and human effort in designing features is a major advantage for CNNs.

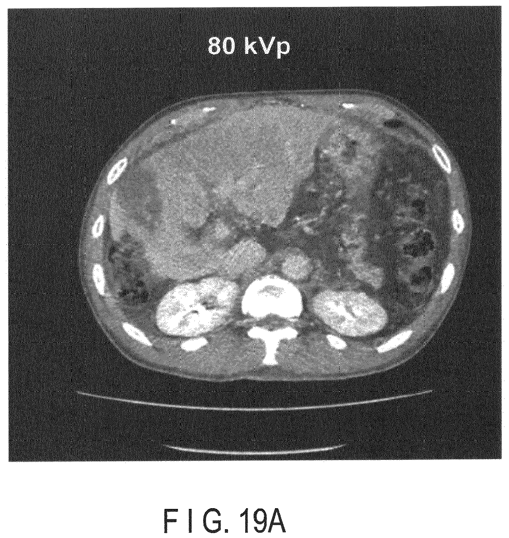

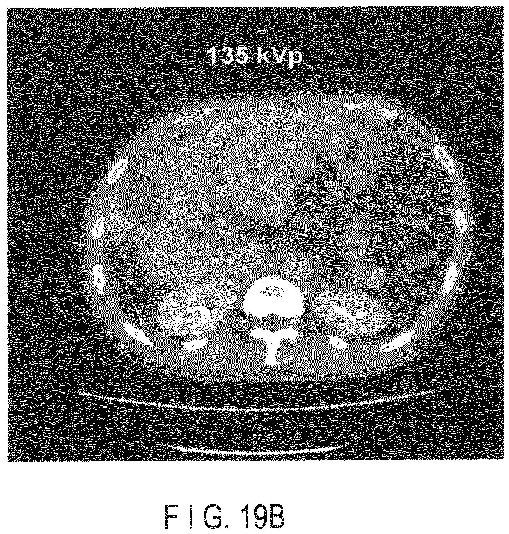

Figures 19A and 19B respectively show examples of high-quality low- and high-kVp images generated by step 230 from the low-quality low- and high-kVp images in Figures 5A and 5B. As can be seen by comparing the low- and high-quality images, processing using the network 351 produces a significant improvement in image quality.

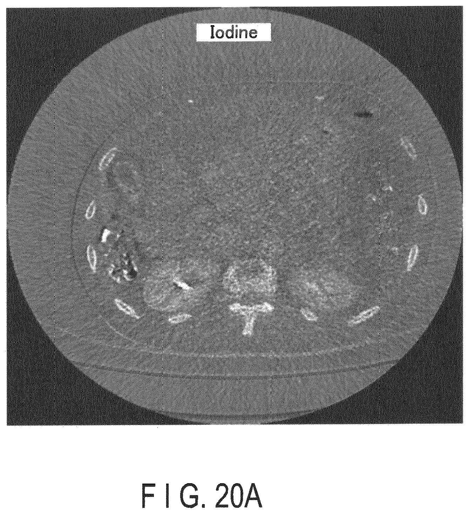

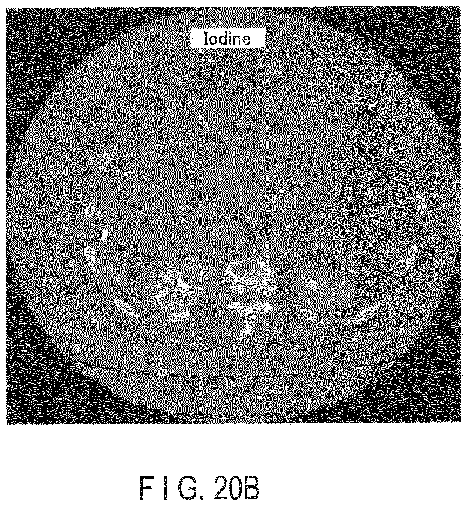

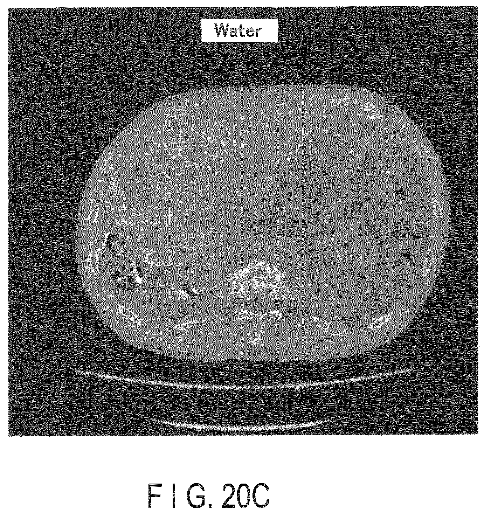

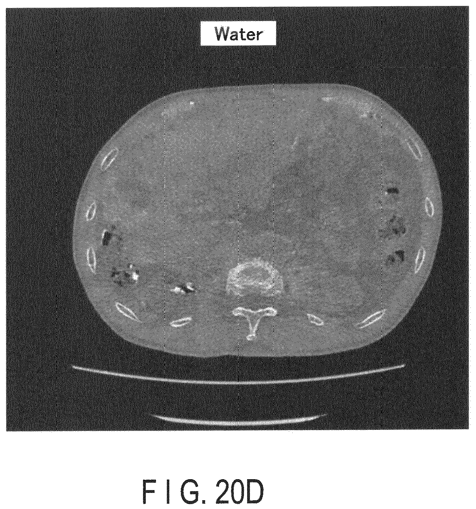

Figures 20A and 20C respectively show iodine and water material component images generated using conventional material decomposition methods on the low-quality low- and high-kVp images in Figures 5A and 5B. Figures 20B and 20D respectively show iodine and water material component images generated using applying the high-quality images in Figures 19A and 19B to the DL-ANN network 361 in step 240. A comparison of the iodine images in Figures 20A and 20B (and similarly a comparison of the water images in Figures 20C and 20D) reveals that method 200 produces a significant improvement in image quality for images reconstructed from sparse kVp-switching projection data.

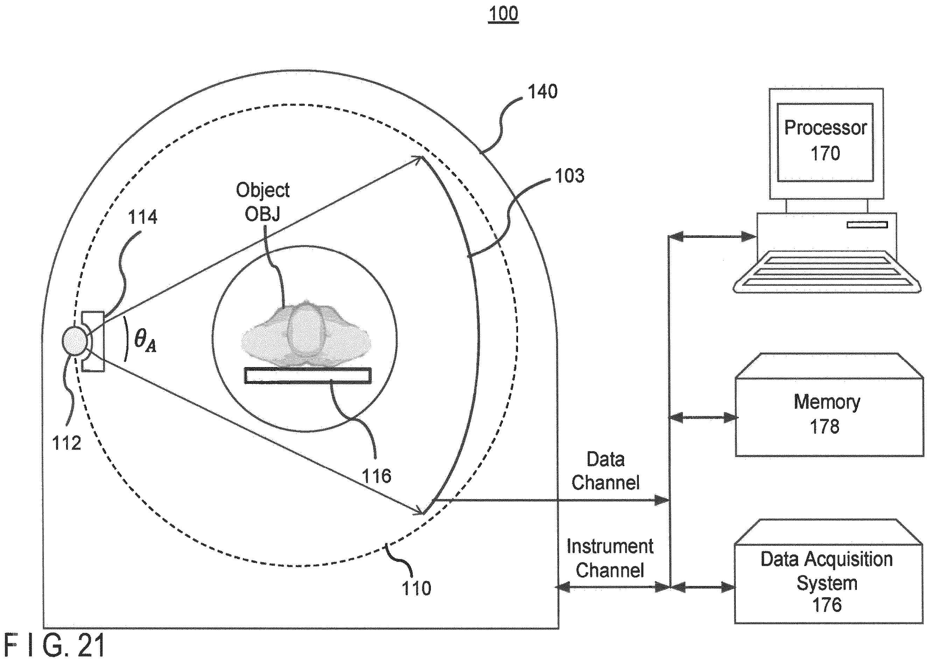

Figure 21 shows a first embodiment of a computed tomography (CT) scanner having energy-integrating detectors arranged in a third-generation geometry. The diagram illustrates relative positions among the X-ray source 112, the collimator/filter 114, the X-ray detector 103, and the photon-counting detectors PCD1 through PCDN.

In addition to the configuration of the X-ray source 112 and the detector unit 103 shown in Figure 21, other types and combinations of X-ray detectors and X-ray source can be used to obtain the projection data.

Figure 21 also shows circuitry and hardware for acquiring, storing, processing, and distributing X-ray projection data. The circuitry and hardware include: a processor 170, a memory 178, and a data acquisition system 176.

As the X-ray source 112 and the detector unit 103 are housed in a gantry 140 and rotate around circular path of the annular rotational frame 110. The detector elements in the detector unit 103 detect the X-ray radiation that has been transmitted and output the detected signals as the detector unit 103 rotates. In one embodiment, the detector unit 103 has densely placed energy-integrating detectors in predetermined channel and segment directions on the detector unit surface.

In one embodiment, the X-ray source 112 is optionally a single X-ray source that is configured to perform a kVp-switching function for emitting X-ray radiation at a predetermined high-level energy and at a predetermined low-level energy.

The detector unit 103 can use energy integrating detectors such as scintillation elements with photo-multiplier tubes or avalanche photo-diodes to detect the resultant scintillation photons from scintillation events resulting from the X-ray radiation interacting with the scintillator elements. The scintillator elements can be crystalline, an organic liquid, a plastic, or other know scintillator.

The CT scanner also includes a data channel that routes projection measurement results from the photon-counting detectors and the detector unit 103 to a data acquisition system 176, a processor 170, and memory 178. The data acquisition system 176 controls the acquisition, digitization, and routing of projection data from the detectors. The data acquisition system 176 also includes radiography control circuitry to control the rotation of the annular rotating frames 110 and 130. In one embodiment, the data acquisition system 176 will also control the movement of the bed 116, the operation of the X-ray source 112, and the operation of the X-ray detectors 103. The data acquisition system 176 can be a centralized system or alternatively it can be a distributed system. In an embodiment, the data acquisition system 176 is integrated with the processor 170. The processor 170 performs functions including reconstructing images from the projection data, pre-reconstruction processing of the projection data, and post-reconstruction processing of the image data. The processor 170 also performs the functions and methods described herein. The processor 170 is one example of the acquirer and the processor described herein. In the case where the acquirer acquires projection data, the data acquisition system 176 and the processor 170 constitute an example of the acquirer. The processor is not limited to the processor 170 of the CT scanner, but may be implemented as a server device connected with the acquirer via a network. In other words, an X-ray CT system may be realized by a single apparatus including the acquirer and the processor, or by a combination of a first apparatus including the acquirer and a second apparatus including the processor, which are connected via a network. Moreover, the acquirer may be constituted by a first acquirer for acquiring projection data and a second acquirer for acquiring image data from the projection data, and it is also possible to adopt a combination of a first apparatus including the first acquirer and a second apparatus including the second acquirer and the processor, which are connected via a network. Such configurations of utilizing network connections are applicable to all the embodiments.

The pre-reconstruction processing of the projection data can include correcting for detector calibrations, detector nonlinearities, polar effects, noise balancing, and material decomposition. Additionally, the pre-reconstruction processing can include various processing in step 210.

Post-reconstruction processing can include filtering and smoothing the image, volume rendering processing, and image difference processing as needed. Additionally, the Post-reconstruction processing can include steps from the various implementations method 200, including process 202, 310, 320, and 330.

The image-reconstruction process can be performed using filtered back-projection, iterative-image-reconstruction methods, or stochastic-image-reconstruction methods. Additionally, the image-reconstruction processing can include step 220.

Both the processor 170 and the data acquisition system 176 can make use of the memory 178 to store, e.g., projection data, reconstructed images, calibration data and parameters, and computer programs.

The processor 170 can include a CPU and a network controller. The CPU can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VHDL, Verilog, or any other hardware description language and the code may be stored in an electronic memory directly within the FPGA or CPLD, or as a separate electronic memory. Further, the memory may be non-volatile, such as ROM, EPROM, EEPROM or FLASH memory. The memory can also be volatile, such as static or dynamic RAM, and a processor, such as a microcontroller or microprocessor, may be provided to manage the electronic memory as well as the interaction between the FPGA or CPLD and the memory.

Alternatively, the CPU in the reconstruction processor may execute a computer program including a set of computer-readable instructions that perform the functions described herein, the program being stored in any of the above-described non-transitory electronic memories and/or a hard disk drive, CD, DVD, FLASH drive or any other known non-transitory, computer-readable storage media. In other words, such storage media, etc. store executable instructions which, when executed by circuitry, cause the circuitry to perform the methods described herein. Further, the computer-readable instructions may be provided as a utility application, background daemon, or component of an operating system, or combination thereof, executing in conjunction with a processor, such as a Xenon processor from Intel of America or an Opteron processor from AMD of America and an operating system, such as Microsoft VISTA, UNIX, Solaris, LINUX, Apple, MAC-OS and other operating systems known to those skilled in the art. Further, CPU can be implemented as multiple processors cooperatively working in parallel to perform the instructions.

In one embodiment, the reconstructed images can be displayed on a display. The display can be an LCD display, CRT display, plasma display, OLED, LED or any other display known in the art. The network controller can be, e.g., an Intel Ethernet PRO network interface card from Intel Corporation of America, can interface between the various parts of the CT scanner. Additionally, the network controller can also interface with an external network. As can be appreciated, the external network can be a public network, such as the Internet, or a private network such as an LAN or WAN network, or any combination thereof and can also include PSTN or ISDN sub-networks. The external network can also be wired, such as an Ethernet network, or can be wireless such as a cellular network including EDGE, 3G and 4G wireless cellular systems. The wireless network can also be WiFi, Bluetooth, or any other wireless form of communication that is known.

The memory 178 can be a hard disk drive, CD-ROM drive, DVD drive, FLASH drive, RAM, ROM or any other electronic storage or non-transitory, computer-readable storage medium known in the art. Such a storage medium, etc. store executable instructions which, when executed by circuitry, cause the circuitry to perform the methods described herein.

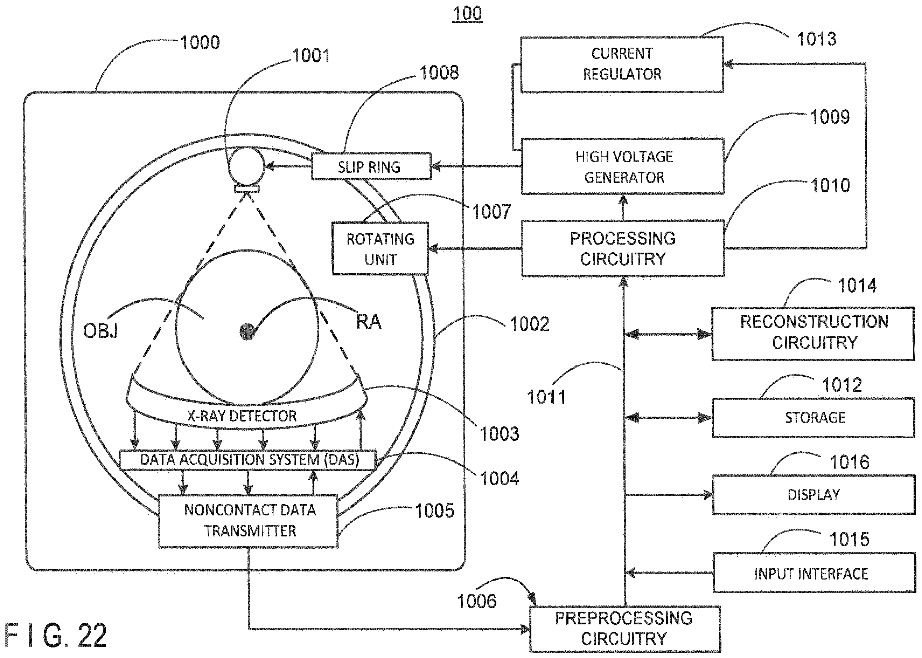

Figure 22 illustrates a second embodiment of the radiography gantry included in a CT apparatus or scanner 100. As shown in Figure 22, a radiography gantry 1000 is illustrated from a side view and further includes an X-ray tube 1001, an annular frame 1002, and a multi-row or two-dimensional-array-type X-ray detector 1003. The X-ray tube 1001 and X-ray detector 1003 are diametrically mounted across an object OBJ on the annular frame 1002, which is rotatably supported around a rotation axis RA. A rotating unit 1007 rotates the annular frame 1002 at a high speed, such as 0.4 sec/rotation, while the object OBJ is being moved along the axis RA into or out of the illustrated page.

The first embodiment of an X-ray computed tomography (CT) apparatus according to the present inventions will be described below with reference to the views of the accompanying drawing. Note that X-ray CT apparatuses include various types of apparatuses, e.g., a rotate/rotate-type apparatus in which an X-ray tube and X-ray detector rotate together around an object to be examined, and a stationary/rotate-type apparatus in which many detection elements are arrayed in the form of a ring or plane, and only an X-ray tube rotates around an object to be examined. The present inventions can be applied to either type. In this case, the rotate/rotate type, will be exemplified.

The multi-slice X-ray CT apparatus further includes a high voltage generator 1009 that generates a tube voltage applied to the X-ray tube 1001 through a slip ring 1008 so that the X-ray tube 1001 generates X-rays. The X-rays are emitted towards the object OBJ, whose cross sectional area is represented by a circle. For example, the X-ray tube 1001 having an average X-ray energy during a first scan that is less than an average X-ray energy during a second scan. Thus, two or more scans can be obtained corresponding to different X-ray energies. The X-ray detector 1003 is located at an opposite side from the X-ray tube 1001 across the object OBJ for detecting the emitted X-rays that have transmitted through the object OBJ. The X-ray detector 1003 further includes individual detector elements or units.

The CT apparatus further includes other devices for processing the detected signals from X-ray detector 1003. A data acquisition circuit or a Data Acquisition System (DAS) 1004 converts a signal output from the X-ray detector 1003 for each channel into a voltage signal, amplifies the signal, and further converts the signal into a digital signal. The X-ray detector 1003 and the DAS 1004 are configured to handle a predetermined total number of projections per rotation (TPPR).

The above-described data is sent to a preprocessing circuitry 1006, which is housed in a console outside the radiography gantry 1000 through a non-contact data transmitter 1005. The preprocessing circuitry 1006 performs certain corrections, such as sensitivity correction on the raw data. A storage 1012 stores the resultant data, which is also called projection data at a stage immediately before reconstruction processing. The storage 1012 is connected to a processing circuitry 1010 through a data/control bus 1011, together with a reconstruction circuitry 1014, input interface 1015, and display 1016. The processing circuitry 1010 controls a current regulator 1013 that limits the current to a level sufficient for driving the CT system. Note that the term "storage" is replaceable with "memory", "storage unit", "memory unit", or the like. The term "reconstruction circuitry" is replaceable with "reconstruction device", "reconstruction processor", or the like. The term "display" is replaceable with "display unit" or the like. The radiography gantry 1000 and part of the reconstruction circuitry 1014 constitute an example of the acquirer. The remaining part of the reconstruction circuitry 1014 here constitutes an example of the processor. The processor is not limited to the reconstruction circuitry 1014 of the X-ray CT apparatus, but may be implemented as a server device connected with the acquirer via a network.

The detectors are rotated and/or fixed with respect to the patient among various generations of the CT scanner systems. In one embodiment, the above-described CT system can be an example of a combined third-generation geometry and fourth-generation geometry system. In the third-generation system, the X-ray tube 1001 and the X-ray detector 1003 are diametrically mounted on the annular frame 1002 and are rotated around the object OBJ as the annular frame 1002 is rotated about the rotation axis RA. In the fourth-generation geometry system, the detectors are fixedly placed around the patient and an X-ray tube rotates around the patient. In an alternative embodiment, the radiography gantry 1000 has multiple detectors arranged on the annular frame 1002, which is supported by a C-arm and a stand.

The storage 1012 can store the measurement value representative of the irradiance of the X-rays at the X-ray detector unit 1003. Further, the storage 1012 can store a dedicated program for executing the methods described herein (e.g., method 200 and variations thereof). That is, the storage 1012 may be a non-transitory, computer-readable storage medium storing executable instructions which, when executed by circuitry, causes the circuitry to perform the methods described herein.

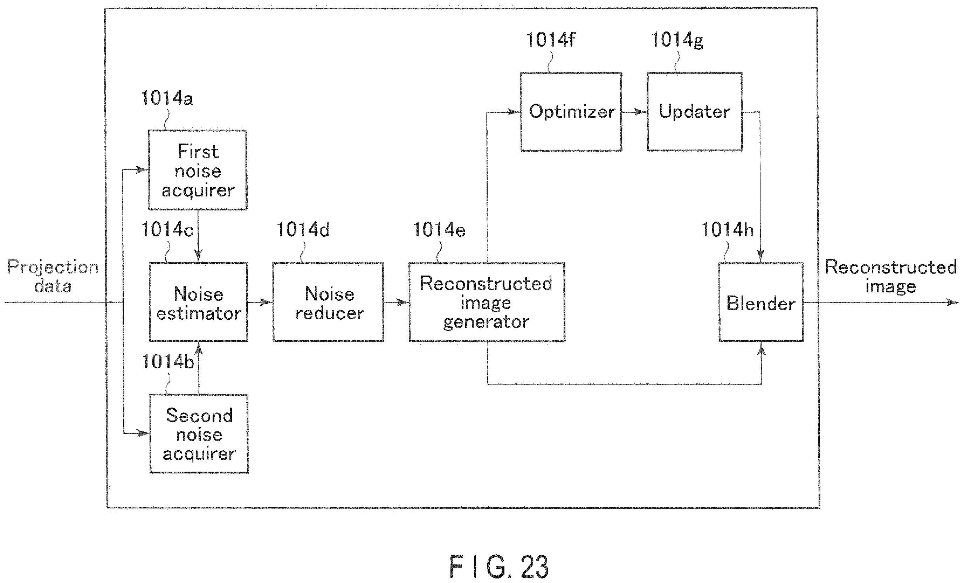

The reconstruction circuitry 1014 can execute various steps of methods described herein (e.g., step 220 of method 200 and variations thereof). For example, the reconstruction circuitry 1014 may employ the above-described adaptive iterative dose reduction (AIDR) three-dimensional (3D) reconstruction method. In the case of this reconstruction method, the reconstruction circuitry 1014 performs two-stage noise reduction processing with noise models, i.e., on projection data and on image data, in order to reduce noise and artifacts so that reconstructed images with high S/N ratio and enhanced texture are generated. The reconstruction circuitry 1014 for this processing includes, as shown in Figure 23, a first noise acquirer 1014a, a second noise acquirer 1014b, a noise estimator 1014c, a noise reducer 1014d, a reconstructed image generator 1014e, an optimizer 1014f, an updater 1014g, and a blender 1014h. Note that each of these components may be circuitry.

The first noise acquirer 1014a estimates an amount of noise by applying a system model (a scanner model, etc., that take into account the unique characteristics of a device, such as a device geometry) to projection count data before logarithmic conversion.

The second noise acquirer 1014b estimates an amount of noise by applying a statistical noise model (a noise model that statistically takes into account the photon noise and electrical noise in each X-ray dose band) to the projection count data before logarithmic conversion.

The noise estimator 1014c obtains the total amount of estimated noise related to the projection count data before logarithmic conversion, based on the respective noise amounts estimated by the first noise acquirer 1014a and the second noise acquirer 1014b.

The noise reducer 1014d performs noise reduction processing for the projection count data before logarithmic conversion in accordance with the noise amount obtained by the noise estimator 1014c. The noise reducer 1014d further performs logarithmic conversion, etc. for this noise-reduced projection count data and outputs the resultant data.

The reconstructed image generator 1014e performs reconstruction processing for the projection data (after the noise reduction processing and the logarithmic conversion) received from the noise reducer 1014d to generate a reconstructed image. This reconstruction processing performed by the reconstructed image generator 1014e may adopt iterative approximation reconstruction (full IR), filtered back-projection (FBP), or a combination thereof (hybrid processing).

The optimizer 1014f performs optimization processing with an anatomical model for the reconstructed image received from the reconstructed image generator 1014e, or for an updated reconstructed image fed back from the updater 1014g, so that noise present on the image data is selectively removed while the structures are retained with high sharpness using three dimensional information. The optimizer 1014f also performs predetermined smoothing processing for the reconstructed image received from the reconstructed image generator 1014e.

The updater 1014g performs update processing for the reconstructed image using the optimized image data and the smoothed image data output from the optimizer 1014f. The updated reconstructed image is output back to the optimizer 1014f. The optimizer 1014f and the updater 1014g repeat these optimization processing, smoothing processing, and update processing until predetermined conditions are met.

The blender 1014h blends the reconstructed image output from the updater 1014g with the (initial) reconstructed image output from the reconstructed image generator 1014e in a predetermined ratio so that the noise granularity is maintained on the image data while the S/N ratio is improved, and therefore, a reconstructed image having more natural texture is produced.

Note that how many times the respective processing between the optimizer 1014f and the updater 1014g should be repeated, and what blending ratio the blender 1014h should adopt for its blend processing may be determined according to imaging sites, clinical applications, etc.

Further, the reconstruction circuitry 1014 can execute pre-reconstruction processing image processing such as volume rendering processing and image difference processing as needed.

The pre-reconstruction processing of the projection data performed by the preprocessing circuitry 1006 can include correcting for detector calibrations, detector nonlinearities, and polar effects, for example. Further, the pre-reconstruction processing can include step 210.

Post-reconstruction processing performed by the reconstruction circuitry 1014 can include filtering and smoothing the image, volume rendering processing, and image difference processing as needed. The image reconstruction process can implement various steps of method 200 (e.g., steps 230, 230, and 250) and also the offline training of the DL-ANN networks (e.g., process 310, 320, and 330). The reconstruction circuitry 1014 can use the memory to store, e.g., projection data, reconstructed images, calibration data and parameters, and computer programs.

The reconstruction circuitry 1014 can include a CPU (processing circuitry) that can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VHDL, Verilog, or any other hardware description language and the code may be stored in an electronic memory directly within the FPGA or CPLD, or as a separate electronic memory. Further, the storage 1012 can be non-volatile, such as ROM, EPROM, EEPROM or FLASH memory. The storage 1012 can also be volatile, such as static or dynamic RAM, and a processor, such as a microcontroller or microprocessor, can be provided to manage the electronic memory as well as the interaction between the FPGA or CPLD and the memory.

Alternatively, the CPU in the reconstruction circuitry 1014 can execute a computer program including a set of computer-readable instructions that perform the functions described herein, the program being stored in any of the above-described non-transitory electronic memories and/or a hard disk drive, CD, DVD, FLASH drive or any other known non-transitory, computer-readable storage media. In other words, such storage media, etc. store executable instructions which, when executed by circuitry, cause the circuitry to perform the methods described herein. Further, the computer-readable instructions may be provided as a utility application, background daemon, or component of an operating system, or combination thereof, executing in conjunction with a processor, such as a Xenon processor from Intel of America or an Opteron processor from AMD of America and an operating system, such as Microsoft VISTA, UNIX, Solaris, LINUX, Apple, MAC-OS and other operating systems known to those skilled in the art. Further, CPU can be implemented as multiple processors cooperatively working in parallel to perform the instructions.

In one embodiment, the reconstructed images can be displayed on a display 1016. The display 1016 can be an LCD display, CRT display, plasma display, OLED, LED or any other display known in the art.

The storage 1012 can be a hard disk drive, CD-ROM drive, DVD drive, FLASH drive, RAM, ROM or any other electronic storage or storage medium known in the art.

**Claims**

1. An X-ray computed tomography system (100) comprising:

   an acquirer (170, 176) configured to acquire a first image (355(L)) and a second image (355(H)), the first image reconstructed based on a first projection dataset corresponding to a group of discrete first views and acquired with emission of X-rays of a first energy, the second image reconstructed based on a second projection dataset corresponding to a group of discrete second views different from the first views and acquired with emission of X-rays of a second energy different from the first energy,
   **characterized by**:
   a processor (170) configured to generate a third image (353(L)) corresponding to the first image in which streak artifacts are mitigated and a fourth image (353(H)) corresponding to the second image in which streak artifacts are mitigated, by inputting the first image (355(L)) and the second image (355(H)) to a learned model (351) adapted to output the third image (353(L)) and the fourth image (353(H)) based on the first image (355(L)) and the second image (355(H)).

2. The X-ray computed tomography system according to claim 1, wherein a group of third views corresponding to the third image (353(L)) and a group of fourth views corresponding to the fourth image (353(H)) comprise the group of first views and the group of second views, respectively.

3. The X-ray computed tomography system according to claim 2, wherein the group of third views has a greater number of views than the group of first views, and the group of fourth views has a greater number of views than the group of second views.

4. The X-ray computed tomography system according to claim 1, wherein each of the first projection dataset and the second projection dataset is a sonogram.

5. The X-ray computed tomography system according to claim 1, wherein each of the third image (353(L)) and the fourth image (353(H)) is a computed tomography image corresponding to all views required for image reconstruction.

6. The X-ray computed tomography system according to claim 1, wherein

   the acquirer (170, 176) is configured to

      obtain projection data representing an intensity of X-ray radiation at a plurality of detector elements and constituting the first projection dataset and the second projection dataset, the first projection dataset representing first sparse-view data acquired using a first voltage applied to an X-ray source (112), the second projection dataset representing second sparse-view data acquired using a second voltage applied to the X-ray source (112), the second voltage being greater than the first voltage and the first sparse-view data being acquired at the group of first views that are different from the group of second views at which the second sparse-view data is acquired,
      reconstruct, from the first sparse-view data, a first low-energy image as the first image (355(L)), and
      reconstruct, from the second sparse-view data, a first high-energy image as the second image (355(H)), and

   the processor (170) is configured to

      acquire, as the learned model (351), an artifact-mitigating neural network that has two channels, one input channel for a low-energy image and another input channel for a high-energy image, the artifact-mitigating neural network having been trained using a training dataset, wherein the training dataset includes input images that are respective pairs of sparse-view reconstructed images that have complementary streak artifacts and corresponding target images in which the streak artifacts are mitigated, and

apply the first low-energy image and the first high-energy image to the artifact-mitigating neural network to generate the third image (353(L)) and the fourth image (353(H)) as artifact-mitigated images.

7. The X-ray computed tomography system according to claim 6, wherein the artifact-mitigated images include a second low-energy image as the third image (353(L)) and a second high-energy image as the fourth image (353(H)), the second low-energy image representing the first low-energy image after mitigation of the streak artifacts, and the second high-energy image representing the first high-energy image after mitigation of the streak artifacts.

8. The X-ray computed tomography system according to claim 7, wherein the processor (170) is further configured to

acquire a material-decomposition neural network that has two channels, one input channel for the low-energy image and another input channel for the high-energy image, the material-decomposition neural network having been trained to generate a first material image and a second material image when a pair of a low-energy image and a high-energy image, which have streak artifacts mitigated, are applied to the material decomposition neural network, and
apply the second low-energy image and the second high-energy image to the material-decomposition neural network to generate material-decomposed images.

9. The X-ray computed tomography system according to claim 6, wherein the artifact-mitigating neural network has been trained using a training dataset in which target images are generated based on first full-view projection data acquired using a low-energy X-ray beam and second full-view projection data acquired using a high-energy X-ray beam.

10. The X-ray computed tomography system according to claim 6, wherein the artifact-mitigating neural network is also a material-decomposition neural network that has been trained to both mitigate streak artifacts and decompose spectral images into material components as an integrated process when sparse-view reconstructed images are applied to the artifact-mitigating neural network.

11. The X-ray computed tomography system according to claim 10, wherein

the artifact-mitigating neural network has been trained using a training dataset in which target images are material images decomposed from spectral images reconstructed from first full-view projection data acquired using a low-energy X-ray beam and from second full-view projection data acquired using a high-energy X-ray beam, and
the input images are spectral images reconstructed from first sparse-view projection data acquired using the low-energy X-ray beam and from second sparse-view projection data acquired using the high-energy X-ray beam, the first sparse-view projection data being at projection views that are different angles than projection views of the second sparse-view projection data.

12. The X-ray computed tomography system according to claim 6, wherein the artifact-mitigating neural network has been trained using a training dataset in which the input images are reconstructed using a same reconstruction method as used to reconstruct the first low-energy image and the first high-energy image.

13. The X-ray computed tomography system according to claim 6, further comprising

an X-ray source (112) configured to radiate X-rays having an energy spectrum that depends on a voltage applied to the X-ray source,
an energy-integrating X-ray detector (103) having the plurality of detector elements configured to output the projection data, and
a controller configured to

rotate the X-ray source and the energy-integrating X-ray detector (103) through a series of projection views, and
change, back-and-forth between a high kilo-voltage (kV) and a low kV, the voltage applied to the X-ray source (112) at increments of two or more projection views of the series of projection views.

14. The X-ray computed tomography system according to claim 13, wherein the controller is configured to change the voltage applied to the X-ray source such that a number of projection views at the high kV is different from a number of projection views at the low kV.

15. A method of mitigating artifacts, comprising:

acquiring a first image (355(L)) and a second image (355(H)), the first image reconstructed based on a first projection dataset corresponding to a group of discrete first views and acquired with emission of X-rays of a first energy, the second image reconstructed based on a second projection dataset corresponding to a group of discrete second views different from the first views and acquired with emission of X-rays of a second energy different from the first energy,

**characterized by**:

generating a third image (353(L)) corresponding to the first image (355(L)) in which streak artifacts are mitigated and a fourth image (353(H)) corresponding to the second image (355(H)) in which streak artifacts are mitigated, by inputting the first image (355(L)) and the second image (355(H)) to a learned model (351) adapted to output the third image (353(L)) and the fourth image (353(H)) based on the first image (355(L)) and the second image (355(H)).

**Patentansprüche**

1. Röntgen-Computertomografiesystem (100), umfassend:

eine Erlangungseinrichtung (170, 176), die dafür konfiguriert ist, ein erstes Bild (355(L)) und ein zweites Bild (355(H)) zu erlangen, wobei das erste Bild auf der Grundlage eines ersten Projektionsdatensatzes rekonstruiert wird, der einer Gruppe von diskreten ersten Perspektiven entspricht und mit der Emission von Röntgenstrahlen einer ersten Energie erlangt wird, wobei das zweite Bild auf der Grundlage eines zweiten Projektionsdatensatzes rekonstruiert wird, der einer Gruppe von diskreten zweiten Perspektiven entspricht, die sich von den ersten Perspektiven unterscheiden, und mit der Emission von Röntgenstrahlen einer zweiten Energie erlangt wird, die sich von der ersten Energie unterscheidet,

**gekennzeichnet durch**:

einen Prozessor (170), der dafür konfiguriert ist, ein drittes Bild (353(L)), das dem ersten Bild entspricht, in dem Streifenartefakte abgeschwächt sind, und ein viertes Bild (353(H)), das dem zweiten Bild entspricht, in dem Streifenartefakte abgeschwächt sind, durch Eingeben des ersten Bildes (355(L)) und des zweiten Bildes (355(H)) in ein erlerntes Modell (351) zu erzeugen, das dafür eingerichtet ist, das dritte Bild (353(L)) und das vierte Bild (353(H)) auf der Grundlage des ersten Bildes (355(L)) und des zweiten Bildes (355(H)) auszugeben.

2. Röntgen-Computertomografiesystem nach Anspruch 1, wobei eine Gruppe dritter Perspektiven, die dem dritten Bild (353(L)) entspricht, und eine Gruppe vierter Perspektiven, die dem vierten Bild (353(H)) entspricht, die Gruppe der ersten Perspektiven bzw. die Gruppe der zweiten Perspektiven umfassen.

3. Röntgen-Computertomografiesystem nach Anspruch 2, wobei die Gruppe der dritten Perspektiven eine größere Anzahl von Perspektiven aufweist als die Gruppe der ersten Perspektiven und die Gruppe der vierten Perspektiven eine größere Anzahl von Perspektiven aufweist als die Gruppe der zweiten Perspektiven.

4. Röntgen-Computertomografiesystem nach Anspruch 1, wobei jeder des ersten Projektionsdatensatzes und des zweiten Projektionsdatensatzes ein Sonogramm ist.

5. Röntgen-Computertomografiesystem nach Anspruch 1, wobei jedes des dritten Bildes (353(L)) und des vierten Bildes (353(H)) ein Computertomografie-Bild ist, das allen für die Bildrekonstruktion erforderlichen Perspektiven entspricht.

6. Röntgen-Computertomografiesystem nach Anspruch 1, wobei die Erlangungseinrichtung (170, 176) dafür konfiguriert ist:

Projektionsdaten zu erlangen, die eine Intensität der Röntgenstrahlung an einer Vielzahl von Detektorelementen darstellen und den ersten Projektionsdatensatz und den zweiten Projektionsdatensatz bilden, wobei der erste Projektionsdatensatz erste Sparse-View-Daten darstellt, die unter Verwendung einer an eine Röntgenquelle (112) angelegten ersten Spannung erlangt wurden, wobei der zweite Projektionsdatensatz zweite Sparse-View-Daten darstellt, die unter Verwendung einer zweiten an die Röntgenquelle (112) angelegten Spannung erlangt wurden, wobei die zweite Spannung größer als die erste Spannung ist und die ersten Sparse-View-Daten bei der Gruppe von ersten Perspektiven erlangt wurden, die sich von der Gruppe von zweiten Perspektiven, bei denen die zweiten Sparse-View-Daten erlangt wurden, unterscheiden,

aus den ersten Sparse-View-Daten ein erstes Niedrigenergie-Bild als erstes Bild (355(L)) zu rekonstruieren, und aus den zweiten Sparse-View-Daten ein erstes Hochenergie-Bild als zweites Bild (355(H)) zu rekonstruieren, und

der Prozessor (170) dafür konfiguriert ist:

als gelerntes Modell (351) ein artefaktabschwächendes neuronales Netz zu erlangen, das zwei Kanäle aufweist, nämlich einen Eingabekanal für ein Niedrigenergie-Bild und einen anderen Eingabekanal für ein Hochenergie-Bild, wobei das artefaktabschwächende neuronale Netz unter Verwendung eines Trainingsdatensatzes trainiert worden ist, wobei der Trainingsdatensatz Eingabebilder einschließt, die jeweilige Paare von rekonstruierten Sparse-View-Bildern, die komplementäre Streifenartefakte aufweisen, und entsprechenden Zielbildern, in denen die Streifenartefakte abgeschwächt sind, sind, und das erste Niedrigenergie-Bild und das erste Hochenergie-Bild auf das artefaktabschwächende neuronale Netz anzuwenden, um das dritte Bild (353(L)) und das vierte Bild (353(H)) als artefaktabgeschwächte Bilder zu erzeugen.

7. Röntgencomputertomografiesystem nach Anspruch 6, wobei die artefaktabgeschwächten Bilder ein zweites Niedrigenergie-Bild als drittes Bild (353(L)) und ein zweites Hochenergie-Bild als viertes Bild (353(H)) einschließen, wobei das zweite Niedrigenergie-Bild das erste Niedrigenergie-Bild nach Abschwächung der Streifenartefakte darstellt und das zweite Hochenergie-Bild das erste Hochenergie-Bild nach Abschwächung der Streifenartefakte darstellt.

8. Röntgen-Computertomografiesystem nach Anspruch 7, wobei der Prozessor (170) ferner dafür konfiguriert ist:

ein neuronales Netz zur Materialzerlegung zu erlangen, das zwei Kanäle aufweist, nämlich einen Eingabekanal für das Niedrigenergie-Bild und einen weiteren Eingabekanal für das Hochenergie-Bild, wobei das neuronale Netz zur Materialzerlegung dafür trainiert worden ist, ein erstes Materialbild und ein zweites Materialbild zu erzeugen, wenn ein Paar aus einem Niedrigenergie-Bild und einem Hochenergie-Bild, bei denen die Streifenartefakte abgeschwächt wurden, auf das neuronale Netz zur Materialzerlegung angewendet wird, und das zweite Niedrigenergie-Bild und das zweite Hochenergie-Bild auf das neuronale Netz zur Materialzerlegung anzuwenden, um Bilder mit Materialzerlegung zu erzeugen.

9. Röntgencomputertomografiesystem nach Anspruch 6, wobei das artefaktabschwächende neuronale Netz unter Verwendung eines Trainingsdatensatzes trainiert worden ist, in dem Zielbilder auf der Grundlage von ersten Vollperspektiven-Projektionsdaten, die unter Verwendung eines Niedrigenergie-Röntgenstrahls erlangt wurden, und zweiten Vollperspektiven-Projektionsdaten, die unter Verwendung eines Hochenergie-Röntgenstrahls erlangt wurden, erzeugt werden.

10. Röntgen-Computertomografiesystem nach Anspruch 6, wobei das artefaktabschwächende neuronale Netz auch ein neuronales Netz zur Materialzerlegung ist, das dafür trainiert worden ist, in einem integrierten Prozess sowohl Streifenartefakte abzuschwächen als auch Spektralbilder in Materialkomponenten zu zerlegen, wenn rekonstruierte Sparse-View-Bilder auf das artefaktabschwächende neuronale Netz angewendet werden.

11. Röntgen-Computertomografiesystem nach Anspruch 10, wobei:

das artefaktabschwächende neuronale Netz unter Verwendung eines Trainingsdatensatzes trainiert worden ist, in dem die Zielbilder Materialbilder sind, die aus Spektralbildern zerlegt wurden, die aus ersten Vollperspektiven-Proj ektionsdaten, die unter Verwendung eines Niedrigenergie-Röntgenstrahls erlangt wurden, und aus zweiten Vollperspektiven-Projektionsdaten, die unter Verwendung eines Hochenergie-Röntgenstrahls erlangt wurden, rekonstruiert wurden, und die Eingabebilder Spektralbilder sind, die aus ersten Sparse-View-Projektionsdaten, die unter Verwendung des Niedrigenergie-Röntgenstrahls erlangt wurden, und aus zweiten Sparse-View-Projektionsdaten, die unter Verwendung des Hochenergie-Röntgenstrahls erlangt wurden, rekonstruiert wurden, wobei die ersten Sparse-View-Projektionsdaten in Projektionsperspektiven vorliegen, die andere Winkel aufweisen als Proj ektionsperspektiven der zweiten Sparse-View-Proj ektionsdaten.

**12.** Röntgen-Computertomografiesystem nach Anspruch 6, wobei das artefaktabschwächende neuronale Netz unter Verwendung eines Trainingsdatensatzes trainiert worden ist, in dem die Eingabebilder unter Verwendung eines gleichen Rekonstruktionsverfahrens rekonstruiert werden, wie es verwendet wird, um das erste Niedrigenergie-Bild und das erste Hochenergie-Bild zu rekonstruieren.

**13.** Röntgen-Computertomografiesystem nach Anspruch 6, ferner umfassend:

eine Röntgenquelle (112), die dafür konfiguriert ist, Röntgenstrahlen mit einem Energiespektrum auszustrahlen, das von einer an die Röntgenquelle angelegten Spannung abhängt,
einen energieintegrierenden Röntgendetektor (103) mit der Vielzahl von Detektorelementen, der dafür konfiguriert ist, die Projektionsdaten auszugeben, und
eine Steuerungseinrichtung, die dafür konfiguriert ist:

die Röntgenquelle und den energieintegrierenden Röntgendetektor (103) durch eine Reihe von Projektionsperspektiven zu drehen, und
die an die Röntgenquelle (112) angelegte Spannung mit Schrittweiten von zwei oder mehr Projektionsperspektiven aus der Folge von Projektionsperspektiven zwischen einer Hoch-Kilovolt-(kV-)Spannung und einer Niedrig-kV-Spannung hin und her zu ändern.

**14.** Röntgen-Computertomografiesystem nach Anspruch 13, wobei die Steuerungseinrichtung dafür konfiguriert ist, die an die Röntgenquelle angelegte Spannung so zu ändern, dass eine Anzahl von Projektionsperspektiven bei der Hoch-kV-Spannung sich von einer Anzahl von Projektionsperspektiven bei der Niedrig-kV-Spannung unterscheidet.

**15.** Verfahren zur Abschwächung von Artefakten, umfassend:

Erlangen eines ersten Bildes (355(L)) und eines zweiten Bildes (355(H)), wobei das erste Bild auf der Grundlage eines ersten Projektionsdatensatzes rekonstruiert wird, der einer Gruppe von diskreten ersten Perspektiven entspricht und mit einer Emission von Röntgenstrahlen einer ersten Energie erlangt wird, wobei das zweite Bild auf der Grundlage eines zweiten Projektionsdatensatzes rekonstruiert wird, der einer Gruppe von diskreten zweiten Perspektiven entspricht, die sich von den ersten Perspektiven unterscheiden und mit einer Emission von Röntgenstrahlen einer zweiten Energie erlangt werden, die sich von der ersten Energie unterscheidet, **gekennzeichnet durch**:
Erzeugen eines dritten Bildes (353(L)), das dem ersten Bild (355(L)) entspricht, in dem Streifenartefakte abgeschwächt sind, und eines vierten Bildes (353(H)), das dem zweiten Bild (355(H)) entspricht, in dem Streifenartefakte abgeschwächt sind, durch Eingeben des ersten Bildes (355(L)) und des zweiten Bildes (355(H)) in ein erlerntes Modell (351), das dafür eingerichtet ist, das dritte Bild (353(L)) und das vierte Bild (353(H)) auf der Grundlage des ersten Bildes (355(L)) und des zweiten Bildes (355(H)) auszugeben.

**Revendications**

**1.** Système de tomodensitométrie à rayons X (100), comprenant :

un module d'acquisition (170, 176) configuré pour acquérir une première image (355(L)) et une deuxième image (355(H)), dans lequel la première image est reconstruite sur la base d'un premier ensemble de données de projection correspondant à un groupe de premières vues discrètes et est acquise avec une émission de rayons X d'une première énergie, et dans lequel la deuxième image est reconstruite sur la base d'un deuxième ensemble de données de projection correspondant à un groupe de deuxièmes vues discrètes différentes des premières vues, et est acquise avec une émission de rayons X d'une deuxième énergie différente de la première énergie, **caractérisé par** :
un processeur (170) configuré pour générer une troisième image (353(L)) correspondant à la première image, dans laquelle des artefacts de raies sont atténués, et une quatrième image (353(H)) correspondant à la deuxième image, dans laquelle des artefacts de raies sont atténués, en fournissant en entrée la première image (355(L)) et la deuxième image (355(H)) dans un modèle appris (351) apte à fournir en sortie la troisième image (353(L)) et la quatrième image (353(H)) sur la base de la première image (355(L)) et de la deuxième image (355(H)).

**2.** Système de tomodensitométrie à rayons X selon la revendication 1, dans lequel un groupe de troisièmes vues correspondant à la troisième image (353(L)) et un groupe de quatrièmes vues correspondant à la quatrième image (353(H)) comprennent le groupe de premières vues et le groupe de deuxièmes vues, respectivement.

3. Système de tomodensitométrie à rayons X selon la revendication 2, dans lequel le groupe de troisièmes vues présente un plus grand nombre de vues que le groupe de premières vues, et le groupe de quatrièmes vues présente un plus grand nombre de vues que le groupe de deuxièmes vues.

4. Système de tomodensitométrie à rayons X selon la revendication 1, dans lequel chacun du premier ensemble de données de projection et du deuxième ensemble de données de projection est un sonogramme.

5. Système de tomodensitométrie à rayons X selon la revendication 1, dans lequel chacune de la troisième image (353(L)) et de la quatrième image (353(H)) est une image de tomodensitométrie correspondant à toutes les vues requises en vue d'une reconstruction d'image.

6. Système de tomodensitométrie à rayons X selon la revendication 1, dans lequel
le module d'acquisition (170, 176) est configuré pour :

   obtenir des données de projection représentant une intensité de rayonnement X au niveau d'une pluralité d'éléments de détection et constituant le premier ensemble de données de projection et le deuxième ensemble de données de projection, le premier ensemble de données de projection représentant des premières données de vues parcimonieuses acquises à l'aide d'une première tension appliquée à une source de rayons X (112), le deuxième ensemble de données de projection représentant des deuxièmes données de vues parcimonieuses acquises à l'aide d'une deuxième tension appliquée à la source de rayons X (112), la deuxième tension étant supérieure à la première tension, et les premières données de vues parcimonieuses étant acquises au niveau du groupe de premières vues qui sont différentes du groupe de deuxièmes vues au niveau desquelles les deuxièmes données de vues parcimonieuses sont acquises ;
   reconstruire, à partir des premières données de vues parcimonieuses, une première image à faible énergie en tant que première image (355(L)) ; et
   reconstruire, à partir des deuxièmes données de vues parcimonieuses, une première image à haute énergie en tant que deuxième image (355(H)) ; et
   le processeur (170) est configuré pour :

      acquérir, en tant que modèle appris (351), un réseau de neurones d'atténuation d'artefacts qui présente deux canaux, un canal d'entrée pour une image à faible énergie et un autre canal d'entrée pour une image à haute énergie, le réseau de neurones d'atténuation d'artefacts ayant été entraîné en faisant appel à un ensemble de données d'entraînement, dans lequel l'ensemble de données d'entraînement inclut des images d'entrée qui sont des paires respectives d'images reconstruites de vues parcimonieuses qui présentent des artefacts de raies complémentaires et des images cibles correspondantes dans lesquelles les artefacts de raies sont atténués ; et
      appliquer la première image à faible énergie et la première image à haute énergie au réseau de neurones d'atténuation d'artefacts en vue de générer la troisième image (353(L)) et la quatrième image (353(H)) en tant qu'images à artefacts atténués.

7. Système de tomodensitométrie à rayons X selon la revendication 6, dans lequel les images à artefacts atténués incluent une deuxième image à faible énergie en tant que troisième image (353(L)) et une deuxième image à haute énergie en tant que quatrième image (353(H)), la deuxième image à faible énergie représentant la première image à faible énergie après atténuation des artefacts de raies, et la deuxième image à haute énergie représentant la première image à haute énergie après atténuation des artefacts de raies.

8. Système de tomodensitométrie à rayons X selon la revendication 7, dans lequel le processeur (170) est en outre configuré pour :

   acquérir un réseau de neurones de décomposition matérielle qui présente deux canaux, un canal d'entrée pour l'image à faible énergie et un autre canal d'entrée pour l'image à haute énergie, le réseau de neurones de décomposition matérielle ayant été entraîné pour générer une première image matérielle et une deuxième image matérielle lorsqu'une paire composée d'une image à faible énergie et d'une image à haute énergie, dont les artefacts de raies ont été atténués, est appliquée au réseau de neurones de décomposition matérielle ; et
   appliquer la seconde image à faible énergie et la deuxième image à haute énergie au réseau de neurones de décomposition matérielle pour générer des images à décomposition matérielle.

9. Système de tomodensitométrie à rayons X selon la revendication 6, dans lequel le réseau de neurones d'atténuation d'artefacts a été entraîné à l'aide d'un ensemble de données d'entraînement dans lequel des images cibles sont générées sur la base de premières données de projection en vue complète acquises au moyen d'un faisceau de rayons X à faible énergie, et de deuxièmes données de projection en vue complète acquises au moyen d'un faisceau de rayons X à haute énergie.

10. Système de tomodensitométrie à rayons X selon la revendication 6, dans lequel le réseau de neurones d'atténuation d'artefacts est également un réseau de neurones de décomposition matérielle qui a été entraîné à atténuer des artefacts de raies et à décomposer des images spectrales en composants matériels dans le cadre d'un processus intégré lorsque des images reconstruites de vues parcimonieuses sont appliquées au réseau de neurones d'atténuation d'artefacts.

11. Système de tomodensitométrie à rayons X selon la revendication 10, dans lequel :

le réseau de neurones d'atténuation d'artefacts a été entraîné à l'aide d'un ensemble de données d'entraînement dans lequel des images cibles sont des images matérielles décomposées à partir d'images spectrales reconstruites à partir de premières données de projection en vue complète acquises au moyen d'un faisceau de rayons X à faible énergie et à partir de deuxièmes données de projection en vue complète acquises au moyen d'un faisceau de rayons X à haute énergie ; et
les images d'entrée sont des images spectrales reconstruites à partir de premières données de projection de vues parcimonieuses acquises au moyen du faisceau de rayons X à faible énergie et de deuxièmes données de projection de vues parcimonieuses acquises au moyen du faisceau de rayons X à haute énergie, les premières données de projection de vues parcimonieuses étant à des vues de projection qui présentent des angles différents des vues de projection des deuxièmes données de projection de vues parcimonieuses.

12. Système de tomodensitométrie à rayons X selon la revendication 6, dans lequel le réseau de neurones d'atténuation d'artefacts a été entraîné en faisant appel à un ensemble de données d'entraînement dans lequel les images d'entrée sont reconstruites en utilisant un même procédé de reconstruction que celui utilisé pour reconstruire la première image à faible énergie et la première image à haute énergie.

13. Système de tomodensitométrie à rayons X selon la revendication 6, comprenant en outre :

une source de rayons X (112) configurée pour émettre des rayons X présentant un spectre d'énergie qui dépend d'une tension appliquée à la source de rayons X ;
un détecteur de rayons X à intégration d'énergie (103) présentant la pluralité d'éléments de détection configurés pour fournir en sortie les données de projection ; et
un contrôleur configuré pour :

faire tourner la source de rayons X et le détecteur de rayons X à intégration d'énergie (103) à travers une série de vues de projection ; et
modifier, par un va-et-vient entre une tension en kilovolt (kV) élevée et une tension kV faible, la tension appliquée à la source de rayons X (112), à des incréments de deux vues de projection ou plus de la série de vues de projection.

14. Système de tomodensitométrie à rayons X selon la revendication 13, dans lequel le contrôleur est configuré pour modifier la tension appliquée à la source de rayons X de sorte qu'un nombre de vues de projection à la tension kV élevée est différent d'un nombre de vues de projection à la tension kV faible.

15. Procédé d'atténuation d'artefacts, comprenant l'étape ci-dessous consistant à :

acquérir une première image (355(L)) et une deuxième image (355(H)), la première image étant reconstruite sur la base d'un premier ensemble de données de projection correspondant à un groupe de premières vues discrètes et est acquise avec une émission de rayons X d'une première énergie, la deuxième image étant reconstruite sur la base d'un deuxième ensemble de données de projection correspondant à un groupe de deuxièmes vues discrètes différentes des premières vues et acquises avec une émission de rayons X d'une deuxième énergie différente de la première énergie,
**caractérisé par** l'étape ci-dessous consistant à :
générer une troisième image (353(L)) correspondant à la première image (355(L)) dans laquelle des artefacts de raies sont atténués, et une quatrième image (353(H)) correspondant à la deuxième image (355(H)) dans laquelle des artefacts de raies sont atténués, en fournissant en entrée la première image (355(L)) et la deuxième image (355(H)) dans un modèle appris (351) apte à fournir en sortie la troisième image (353(L)) et la quatrième image (353(H)) sur la base de la première image (355(L)) et de la deuxième image (355(H)).

F I G. 1

Low kV

High kV

Low kV

High kV

$\theta_A$

$\theta_A$

Annular ring
110

F I G. 2A

High kV

Voltage (X-ray tube)

Low kV

Time (projection angle/view)

F I G. 2B

Low kVp

High kVp

$\theta_A$

$\theta_A$

Annular ring
110

F I G. 3A

Voltage (X-ray tube)

High kVp

Low kVp

Time (projection angle/view)

F I G. 3B

FIG. 4

80 kVp

F I G. 5A

135 kVp

F I G. 5B

F I G. 5C

200

```
┌ ─ ─ ─ ─ ─ ─ ─ ─ ─ ─ ─ ─ ─ ─ ─ ─ ┐ 202
│310                               │ CT Imaging
│Offline Training (artifact reduction)
```

FIG.6

FIG. 7A

FIG. 7B

Low-quality images
355

High-quality images
353

Low-kV
355(L)

Low-kV
353(L)

input

target

Low-kV sparse-view FBP recon.

DL-ANN
351

2-Channel based network

Low-kV full-view FBP recon.

High-kV sparse-view FBP recon.

High-kV full-view FBP recon.

High-kV
355(H)

High-kV
353(H)

FIG. 8

F I G. 9

FIG. 10

353(L)

363(1)

input

Low kV image

target

Basis image 1

2-Channel based DL network

High kV image

Basis image 2

361

353(H)

363(2)

F I G. 11

EP 3 671 647 B1

FIG. 12

200'

202'
CT Imaging

330
Offline Training (artifact reduction + material decomposition)

| Low-quality images 355 | Mat. images 363 |

Training network 332

DL Network 371

kV-switching data 251

Pre-process data 210

Reconstruct Images 220

Low-quality Images 255

Artifact/noise correction & Material decomposition 250

Material Images 257

F I G. 13

FIG. 14

EP 3 671 647 B1

355(L)

355(H)

input

Low-kV sparse-view FBP recon.

High-kV sparse-view FBP recon.

2-Channel based network

371

target

High quality mat. basis 1

High quality mat. basis 2

363(1)

363(2)

F I G. 15

EP 3 671 647 B1

FIG. 16

<u>312</u>

```
┌─────────────────────────────────────┐
│        Initialize the network.       │
│                313                   │
└─────────────────────────────────────┘
                  │
                  ▼
┌─────────────────────────────────────┐
│   Calculate an error between the     │
│   optimized data and the network     │
│   processed noisy/artifact data.     │
│                314                   │
└─────────────────────────────────────┘
                  │
                  ▼
┌─────────────────────────────────────┐
│  Calculate change in error as a      │
│  function of change in the network   │
│  coefficients.                       │
│                315                   │
└─────────────────────────────────────┘
                  │
                  ▼
┌─────────────────────────────────────┐
│         Update the network.          │
│                316                   │
└─────────────────────────────────────┘
                  │
                  ▼
┌─────────────────────────────────────┐
│  Calculate new error between the     │
│  optimized data and the new          │
│  network processed noisy/            │
│  artifact data                       │
│                317                   │
└─────────────────────────────────────┘
                  │
                  ▼
            Stopping
         criteria reached?
                318
                  │
                  ▼
```

# F I G. 17

F I G. 18A

FIG. 18B

F I G. 19A

F I G. 19B

F I G. 20A

F I G. 20B

F I G. 20C

EP 3 671 647 B1

F I G. 20D

51

F I G. 21

F I G. 22

EP 3 671 647 B1

F I G. 23

**REFERENCES CITED IN THE DESCRIPTION**

**Patent documents cited in the description**

- WO 2017223560 A
- WO 2018126396 A
- US 2018018757 A